(19) Europäisches Patentamt
European Patent Office
Office européen des brevets

(11) EP 4 545 593 A1

(12) EUROPEAN PATENT APPLICATION
published in accordance with Art. 153(4) EPC

(43) Date of publication:
**30.04.2025 Bulletin 2025/18**

(21) Application number: **23865877.7**

(22) Date of filing: **15.09.2023**

(51) International Patent Classification (IPC):
***C08K 5/37*** *(2006.01)* ***C08K 5/09*** *(2006.01)*
***C08G 18/42*** *(2006.01)* ***C08G 18/72*** *(2006.01)*

(52) Cooperative Patent Classification (CPC):
**C08G 18/42; C08G 18/72; C08K 5/09; C08K 5/37**

(86) International application number:
**PCT/KR2023/013858**

(87) International publication number:
**WO 2024/058581 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 KR 20220116478**

(71) Applicant: **LG Chem, Ltd.**
**Yeongdeungpo-gu**
**Seoul 07336 (KR)**

(72) Inventors:
- **LEE, Jeong Hyun**
**Daejeon 34122 (KR)**
- **SON, Ho Yeon**
**Daejeon 34122 (KR)**
- **JUN, Shin Hee**
**Daejeon 34122 (KR)**
- **KIM, Se Hoon**
**Daejeon 34122 (KR)**

(74) Representative: **Hoffmann Eitle**
**Patent- und Rechtsanwälte PartmbB**
**Arabellastraße 30**
**81925 München (DE)**

# (54) CURABLE COMPOSITION

(57) The present application provides a curable composition, a thermal interface material (TIM), and a use thereof. In the present application, the curable composition or thermal interface material, and the like can exhibit low adhesion force to a given adherend while exhibiting high thermal conductivity. Also, in the present application, the low adhesion force can be achieved without using an adhesion force adjusting component such as a plasticizer or in a state where the use ratio thereof is minimized. In the present application, the curable composition can also exhibit a precisely controlled curing rate and simultaneously have excellent curability. The present application can also provide a product comprising the curable composition, or a cured body or thermal interface material thereof.

Fig. 4

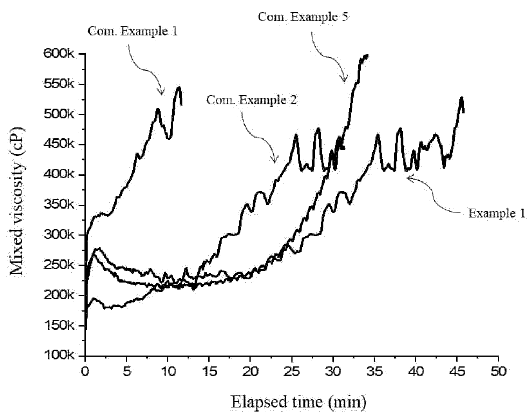


EP 4 545 593 A1

## Description

### Technical Field

This application claims the benefit of priority based on Korean Patent Application No. 10-2022-0116478 dated September 15, 2022, the disclosure of which is incorporated herein by reference in its entirety.
The present application relates to a curable composition, a thermal interface material (TIM), and a use thereof.

### Background Art

As the number of electric or electronic devices requiring heat management, such as batteries, increases, the importance of heat dissipation materials such as thermal interface materials (TIMs) increases. Various types of heat dissipation materials are known. As one of the conventional heat dissipation materials, a material in which a resin binder is filled with a filler having heat dissipation properties is known (for example, Patent Document 1).
In such a heat dissipation material, a silicone resin, a polyolefin resin, an acrylic resin, or an epoxy resin, and the like is usually used as the resin binder.
The heat dissipation material is basically required to have an excellent thermal conductivity, and required to have additional functions as well depending on the use. For example, depending on the use, the heat dissipation material may be required to exhibit low adhesion force to a specific adherend together with the high thermal conductivity.
For example, when it is necessary to replace a part in contact with a heat dissipation material in a product, or necessary to change a location or the like of a heat dissipation material in a process, the heat dissipation material needs to exhibit low adhesion force.
Among known heat dissipation materials, materials showing low adhesion force include materials to which a silicone resin is applied as the resin binder. However, the silicone resin is relatively expensive. In addition, the silicone resin comprises components that cause contact failure and the like when applied to electronic/electrical products, so that the uses are limited.
The polyurethane material applied even in Patent Document 1 can form a heat dissipation material having high thermal conductivity, and has various other advantages, but is a material exhibiting high adhesion force to most adherends.
A method of lowering adhesion force of a material exhibiting high adhesion force includes a method of blending a component known as a so-called plasticizer. However, the plasticizers formulated in a large amount for control of adhesion force has a problem of damaging the inherent merits of the material itself or being eluted during a use process, and the like.
Meanwhile, for a heat dissipation material having curability, it is necessary to control the curing speed of the relevant heat dissipation material.
That is, when forming a heat dissipation material using a heat dissipation material having curability, a process of applying the heat dissipation material before curing to the desired location, and then curing it is performed. However, even after applying the heat dissipation material, it is necessary to replace parts in contact with the heat dissipation material within an article, or to change the position, and the like of the heat dissipation material and/or the parts, but if the curing of the heat dissipation material occurs quickly, the viscosity and hardness, and the like of the material also increase rapidly, so that there is a problem that the time capable of performing the replacement or position change, and the like is shortened.
In addition, if the curing of the heat dissipation material occurs quickly, the time capable of applying the material using dispensing equipment or injection equipment becomes shorter. Typically, in a process of applying a heat dissipation material, there may be a waiting time after loading the heat dissipation material into the dispensing equipment or injection equipment, where if the curing of the heat dissipation material occurs quickly, the waiting time cannot also be properly secured.

[Prior Art Documents]

[Patent Documents]

(Patent Document 1) Korean Laid-Open Patent Publication No. 2016-0105354

Disclosure

### Technical Problem

The present application is intended to provide a curable composition, a thermal interface material (TIM), and a use thereof. The thermal interface material may be one formed by curing the curable composition. It is one object of the

present application that the curable composition or thermal interface material, and the like exhibits low adhesion force to a given adherend while exhibiting high thermal conductivity. Also, in the object of the present application, the matter of achieving the low adhesion force without using an adhesion force adjusting component such as a plasticizer or in a state where the use ratio thereof is minimized is included.

The present application is also intended to ensure that the curable composition exhibits a precisely controlled curing rate and simultaneously has excellent curability.

It is one object of the present application to provide a product comprising the curable composition, or the cured body or thermal interface material thereof.

## Technical Solution

Among the physical properties mentioned in this specification, when the measurement temperature affects the result, the relevant physical property is a physical property measured at room temperature, unless otherwise specified. The term room temperature is a natural temperature without warming or cooling, which means usually one temperature in a range of about 10°C to 30°C or a temperature of about 23°C or about 25°C or so. Also, in this specification, unless otherwise specified, the unit of temperature is °C.

Among the physical properties mentioned in this specification, when the measurement pressure affects the result, the relevant physical property is a physical property measured at normal pressure, unless otherwise specified. The term normal pressure is a natural pressure without pressurization or depressurization, which refers to an atmospheric pressure in a range of about 700 mmHg to 800 mmHg as the normal pressure.

The present application relates to a resin composition. The term resin composition means a composition comprising a component known in the art as a resin, or a composition that does not comprise a resin, but comprises a component capable of forming a resin through a curing reaction or the like. Therefore, in this specification, the scope of the term resin or resin component includes not only components generally known as resins, but also components capable of forming resins through curing and/or polymerization reactions.

The resin composition may be a curable composition. The curable composition may be cured to form a thermal interface material (TIM). Therefore, in this specification, the cured body and the thermal interface material of the resin composition may refer to the same object.

When the resin composition of the present application is a curable composition, the resin composition may be a one-component or two-component composition. The term one-component composition may mean a resin composition in which components participating in curing are included in a state where they are in physical contact with each other, and the term two-component composition may mean a resin composition in which at least some of components participating in curing are physically separated to be divided, and included.

When the resin composition of the present application is a curable composition, the resin composition may be a room temperature curing type, a heat curing type, an energy ray curing type, and/or a moisture curing type. The term room temperature curing type refers to a resin composition that a curing reaction can be initiated and/or proceed at room temperature; the term heat curing type refers to a resin composition that a curing reaction can be initiated and/or proceed by application of heat; the term energy ray curing type refers to a resin composition that a curing reaction can be initiated and/or proceed by irradiation with energy rays (e.g., ultraviolet rays or electron beams, etc.); and the term moisture curing type refers to a resin composition that a curing reaction can be initiated and/or proceed in the presence of moisture.

The resin composition of the present application may be a solvent type or a solventless type. The solventless type may be appropriate when considering an application efficiency aspect or the load to the environment, and the like.

The resin composition of the present application may be a polyurethane composition. **In** this case, the resin composition may comprise polyurethane, or may comprise a component capable of forming polyurethane. For example, the thermal interface material, which is a cured body of the resin composition, may comprise the polyurethane. **In** one example, the polyurethane may be formed by the reaction of a curable component to be described below, and a curing agent thereof.

The resin composition of the present application may exhibit low adhesion force with respect to a specific adherend or form a cured body capable of exhibiting low adhesion force. Such a resin composition may be the polyurethane composition. The polyurethane is known as an adhesive material capable of exhibiting excellent adhesion to various adherends. Therefore, as a method of making the polyurethane composition exhibit low adhesion force to an adherend, a method of introducing a component that lowers the adhesion force, such as a plasticizer, is usually used. When components of such a plasticizer and the like are applied, it is possible to lower the adhesion force of the polyurethane material, but there may be a problem that the relevant component deteriorates other physical properties which could be secured in the polyurethane, or it elutes out of the material during the use process of the polyurethane material. However, in the present application, the low adhesion force can also be achieved for polyurethane materials while using no adhesion force reducing components such as plasticizers or minimizing the used amount. Therefore, in the present application, it is possible to provide a material that solves the problem of high adhesion force that is not required

depending on the use while taking the advantages of the polyurethane material.

The resin composition or the cured body thereof may have an adhesion force to aluminum of 1 N/mm$^2$ or less. The upper limit of the adhesion force of the resin composition or the cured body thereof to aluminum may also be 0.9 N/mm$^2$, 0.8 N/mm$^2$, 0.7 N/mm$^2$, 0.6 N/mm$^2$, 0.5 N/mm$^2$, 0.4 N/mm$^2$, 0.3 N/mm$^2$, 0.2 N/mm$^2$, 0.1 N/mm$^2$, 0.15 N/mm$^2$, 0.09 N/mm$^2$, 0.08 N/mm$^2$, 0.07 N/mm$^2$, 0.06 N/mm$^2$, 0.04 N/mm$^2$ or 0.03 N/mm$^2$. The adhesion force of the resin composition or the cured body thereof to aluminum may be less than or equal to any one of the above-described upper limits. In the present application, the lower limit of the adhesion force to aluminum is not particularly limited. In one example, the adhesion force to aluminum may be 0 N/mm$^2$ or more, or more than 0 N/mm$^2$. The resin composition may be a resin composition that the adhesion force to aluminum is not substantially measured, or may be a resin composition capable of forming a cured body that it is not substantially measured. Therefore, the adhesion force to aluminum may be less than or equal to any one of the above-described upper limits while being more than or equal to 0 N/mm$^2$. The adhesion force of the resin composition or the cured body thereof to aluminum can be measured in the manner described in Examples of this specification.

The resin composition or the cured body thereof may have an adhesion force to polyester of 100 gf/cm or less. In another example, the upper limit of the adhesion force of the resin composition or the cured body thereof to polyester may also be 95 gf/cm, 90 gf/cm, 85 gf/cm, 80 gf/cm, 75 gf/cm, 70 gf/cm, 65 gf/cm, 60 gf/cm, 55 gf/cm, 50 gf/cm, 45 gf/cm, 40 gf/cm, 35 gf/cm, 30 gf/cm, 25 gf/cm, or 20 gf/cm. The adhesion force of the resin composition or the cured body thereof to polyester may be less than or equal to any one of the above-described upper limits. In the present application, the lower limit of the adhesion force to the polyester is not particularly limited. In one example, the lower limit of the adhesion force of the resin composition or the cured body thereof to the polyester may be 0 gf/cm, 2 gf/cm, 4 gf/cm, 6 gf/cm, 8 gf/cm, 10 gf/cm, 12 gf/cm, 14 gf/cm, 16 gf/cm, 18 gf/cm, or 20 gf/cm or so. The resin composition or the cured body thereof may not substantially exhibit adhesion force to polyester. The adhesion force of the resin composition or the cured body thereof to polyester may also be in a range between any one of the above-described lower limits and any one of the above-described upper limits. The adhesion force of the resin composition or the cured body thereof to polyester can be measured in the manner described in Examples of this specification.

The resin composition or the cured body thereof may exhibit excellent thermal conductive properties. For example, the lower limit of the thermal conductivity of the resin composition or the cured body thereof may also be 1.2 W/mk, 1.4 W/mK, 1.6 W/mK, 1.8 W/mK, 2.0 W/mK, 2.2 W/mK, 2.4 W/mK or more, or 2.6 W/mK or so. The thermal conductivity may be more than or equal to any one of the above-described lower limits. The upper limit of the thermal conductivity is not particularly limited. For example, the upper limit of the thermal conductivity of the resin composition or the cured body thereof may also be 10 W/mK, 9 W/mK, 8 W/mK, 7 W/mK, 6 W/mK, 5 W/mK, 4 W/mK, or 3 W/mK or so. The thermal conductivity may also be in a range between any one of the above-described lower limits and any one of the above-described upper limits. The thermal conductivity of such a resin composition or the cured body thereof can be measured by the method disclosed in Examples to be described below.

The resin composition or the cured body thereof may also exhibit appropriate hardness. For example, if the hardness of the resin composition or the cured body thereof is too high, there may be a problem due to excessive brittleness. In addition, through the adjustment of the hardness of the resin composition or the cured body thereof, it is possible to secure impact resistance and vibration resistance, and to secure the durability of the product, according to the application uses. The upper limit of the hardness of the resin composition or the cured body thereof in the shore OO type may be 150, 140, 130, 120, 110, 100, 90, 95, or 80. The Shore OO type hardness may be less than or equal to any one of the above-described upper limits. The lower limit of the Shore OO type hardness may be 10, 15, 20, 25, 30, 35, 40, 45, 50, 55, 60, 65, 70, 75, 80, or 85. The Shore OO type hardness may be more than or equal to any one of the above-described lower limits. The Shore OO type hardness may also be within a range between any one of the above-described upper limits and any of the above-described lower limits. The hardness of such a resin composition or the cured body thereof can be measured by the method disclosed in Examples to be described below.

The resin composition or the cured body thereof may also exhibit appropriate flexibility. For example, as the flexibility of the resin composition or the cured body thereof is adjusted to a desired level, the application uses may be greatly expanded. For example, the upper limit of the curvature radius of the resin composition or the cured body thereof may be 20, 19, 18, 17, 16, 15, 14, 13, 12, 11, 10, 9, or 8 or so. The curvature radius may be less than or equal to any one of the above-described upper limits. The lower limit of the curvature radius may also be, for example, 1, 2, 3, 4, 5, 6, 7, 8, 9, 10, or 11 or so. The curvature radius may be more than or equal to any one of the above-described lower limits. The curvature radius may also be within a range between any one of the above-described upper limits and any one of the above-described lower limits. The curvature radius of such a resin composition or the cured body thereof can be measured by the method disclosed in Examples to be described below, and its unit is mm.

The resin composition of the present application may have insulation properties. That is, the resin composition may have insulation properties and/or form a cured body having insulation properties. For example, the resin composition or the cured body thereof may have a dielectric breakdown voltage of about 3 kV/mm or more, about 5 kV/mm or more, about 7 kV/mm or more, 10 kV/mm or more, 15 kV/mm or more, or 20 kV/mm or more as measured in accordance with ASTM D149. The higher the value of the dielectric breakdown voltage, it seems to have excellent insulation properties, and

thus the upper limit is not particularly limited, but considering the composition or the like of the resin composition, the dielectric breakdown voltage may be about 50 kV/mm or less, 45 kV/mm or less, 40 kV/mm or less, 35 kV/mm or less, or 30 kV/mm or less or so. Such a dielectric breakdown voltage can be controlled by adjusting the insulation properties of the resin composition, which can be achieved, for example, by applying an insulating filler in the resin layer. In general, among fillers, a ceramic filler is known as a component capable of securing insulation properties.

The resin composition or the cured body thereof may have flame retardancy. For example, the resin composition or the cured body thereof may exhibit Grade V-0 in the UL 94 V Test (Vertical Burning Test). Accordingly, it is possible to secure stability against fires and other accidents that are of concern depending on the application uses of the resin composition.

The resin composition or the cured body thereof may have a specific gravity of 5 or less. In another example, the specific gravity may be 4.5 or less, 4 or less, 3.5 or less, or 3 or less. A resin layer exhibiting a specific gravity within such a range is advantageous for providing a more lightweight product. The lower limit of the specific gravity is not particularly limited. For example, the specific gravity may be about 1.5 or more or 2 or more. In order that the resin composition or the cured body thereof exhibits the specific gravity, components added to the resin layer may be adjusted. For example, when adding a filler, a filler capable of securing a desired characteristic (e.g., thermal conductivity) even at a low specific gravity as much as possible, that is, a method of applying a filler with a low specific gravity by itself or applying a surface-treated filler, and the like may be used.

The resin composition may have a low shrinkage rate during or after curing. Through this, it is possible to prevent peeling or void generation, and the like that may occur during the application process. The shrinkage rate may be appropriately adjusted within a range capable of exhibiting the above-described effect, which may be, for example, less than 5%, less than 3%, or less than about 1%. Since the shrinkage rate is more advantageous as the value is lower, the lower limit is not particularly limited.

The resin composition or the cured body thereof may have a low coefficient of thermal expansion (CTE). Through this, it is possible to prevent peeling or void generation, and the like that may occur during application or use processes. The coefficient of thermal expansion may be appropriately adjusted within a range capable of exhibiting the above-described effect, which may be, for example, less than 300 ppm/K, less than 250 ppm/K, less than 200 ppm/K, less than 150 ppm/K, or less than about 100 ppm/K. Since the lower the value of the coefficient of thermal expansion, it may be more advantageous, the lower limit is not particularly limited.

In the resin composition or the cured body thereof, a 5% weight loss temperature in a thermogravimetric analysis (TGA) may be 400°C or more, or an 800°C remaining amount may be 70 weight% or more. The stability at a high temperature may be further improved by such a property. In another example, the 800°C remaining amount may be about 75 weight% or more, about 80 weight% or more, about 85 weight% or more, or about 90 weight% or more. In another example, the 800°C remaining amount may be about 99 weight% or less. The thermogravimetric analysis (TGA) can be measured within the range of 25°C to 800°C at a heating rate of 20°C/min under a nitrogen ($N_2$) atmosphere of 60 $cm^3$/min. The thermogravimetric analysis (TGA) result can also be achieved through composition control of the resin composition. For example, the 800°C remaining amount is usually influenced by the type or ratio of the filler contained in the resin composition, and when an excessive amount of filler is included, the remaining amount increases.

The resin composition of the present application may comprise a curable component. The term curable component means a component comprising one or more compounds containing a functional group capable of participating in a curing reaction. In one example, the functional group capable of participating in the curing reaction may be a hydroxy group. Therefore, the curable component may comprise a reactive compound having a hydroxy group. Here, it means that since the reactive compound has the hydroxy group, it is a compound capable of participating in the curing reaction. Such a reactive compound may be a monomolecular, oligomeric, or polymeric compound.

The reactive compound having the hydroxy group may be a monofunctional compound, or a polyfunctional compound. The term monofunctional compound means the reactive compound containing one hydroxy group per molecule, and the term polyfunctional compound means the reactive compound containing two or more hydroxy groups per molecule.

Also, the reactive compound having the hydroxy group may be an oil-modified compound, or a non-oil-modified compound, which is described below. The oil-modified compound may be the monofunctional compound or the polyfunctional compound, and the non-oil-modified compound may also be the monofunctional compound or the polyfunctional compound.

The polyfunctional compound may be referred to as a polyol compound in this specification. The number of hydroxy groups included in the polyfunctional compound (polyol compound) is not particularly limited. In one example, the lower limit of the number of hydroxy groups included in the polyfunctional compound (polyol compound) may be 2 or 3 per molecule. The number of hydroxy groups included in the polyfunctional compound (polyol compound) may be more than or equal to any one of the above-described lower limits. The upper limit of the number of hydroxy groups included in the polyfunctional compound (polyol compound) may also be 10, 9, 8, 7, 6, 5, 4, 3, or 2 or so per molecule. The number of hydroxy groups included in the polyfunctional compound (polyol compound) may be less than or equal to any one of the

above-described upper limits. The number of hydroxy groups included in the polyfunctional compound (polyol compound) may also be within a range of any one of the above-described lower limits and any one of the above-described upper limits. The number of hydroxy groups included in the polyol compound can be confirmed through $^1$H NMR, where the number of hydroxy groups can be confirmed based on the peaks present in a region of 3 to 4 ppm in $^1$H NMR.

The reactive compound may be an oil-modified compound. The term oil-modified compound means a compound containing a hydroxy group, and containing a linear or branched hydrocarbon group with three or more carbon atoms at the terminal. Therefore, the reactive compound without any linear or branched hydrocarbon group having three or more carbon atoms at the terminal may be referred to herein as a non-oil-modified compound. It can be confirmed through $^1$H NMR whether the reactive compound contains the hydrocarbon group, where the existence and number of the hydrocarbon groups can be confirmed based on the peaks present in the region of 4 to 5 ppm in $^1$H NMR. As the oil-modified compound is applied to be formed as a polyurethane material, it is possible to secure low adhesion force to a specific material while using no adhesion force reducing component such as a plasticizer or minimizing the used amount.

The lower limit of the number of carbon atoms of the linear or branched hydrocarbon group contained at the terminal of the oil-modified compound may be 4, 5, 6, 7, 8, 9, 10, 11, 12, 13, 14, 15, 16, or 17 or so. The number of carbon atoms may be more than or equal to any one of the above-described lower limits. The upper limit of the number of carbon atoms may also be 50, 49, 48, 47, 46, 45, 44, 43, 42, 41, 40, 39, 38, 37, 36, 35, 34, 33, 32, 31, 30, 29, 28, 27, 26, 25, 24, 23, 22, 21, 20, 19, 18, 17, 16, 15, 14, 13, 12, 11, 10, 9, or 8 or so. The number of carbon atoms may be less than or equal to any one of the above-described upper limits. The number of carbon atoms may be within a range between any one of the above-described lower limits and any one of the above-described upper limits.

The linear or branched hydrocarbon group may or may not contain double bonds. In the case of including the double bonds, such double bonds may be conjugated double bonds or cis double bonds.

A specific type of the hydrocarbon group may be exemplified by an alkyl group, an alkenyl group, or an alkynyl group. In one example, the hydrocarbon group may be linked to the alcohol compound via a carbonyl group or a carbonyloxy group, and in this case, the hydrocarbon group may be an alkylcarbonyl group, an alkenylcarbonyl group, an alkynylcarbonyl group, an alkylcarbonyloxy group, an alkenylcarbonyloxy group, or an alkynylcarbonyloxy group. Here, the number of carbon atoms in the alkyl group, alkenyl group or alkynyl group may also be more than or equal to any one of the lower limits of the number of carbon atoms in the above-described linear or branched hydrocarbon group, less than or equal to any one of the upper limits of the number of carbon atoms in the above-described linear or branched hydrocarbon group, or within a range between any one of the lower limits of the number of carbon atoms in the above-described linear or branched hydrocarbon group and any one of the upper limits of the number of carbon atoms in the above-described linear or branched hydrocarbon group.

The alkyl group, alkenyl group, or alkynyl group may be linear or branched, and may be optionally substituted with one substituent. When the substituent is present, the type of the substituent is not particularly limited, and for example, a halogen atom such as fluorine may be exemplified as the substituent.

In one example, the hydrocarbon group may be included in a substituent of Formula 1 below.

[Formula 1]

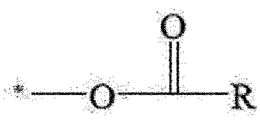

In Formula 1, R is a linear or branched hydrocarbon group.

In Formula 1, the symbol * means that the relevant moiety is linked to the polyol compound. Thus, the oxygen atom in the substituent of Formula 1 may be linked to the polyol compound.

A specific type of the hydrocarbon group, which is R in Formula 1, is as described above. Therefore, the contents on the number of carbon atoms, type, form, and substituent of the above-described hydrocarbon groups may be applied in the same manner as above.

The number of hydrocarbon groups included in the reactive compound is not particularly limited. For example, the lower limit of the number of hydrocarbon groups included in the reactive compound may be 1 or 2 per molecule of the compound. The upper limit of the number of hydrocarbon groups included in the reactive compound may also be 10, 9, 8, 7, 6, 5, 4, 3, or 2 or so per molecule of the compound. The number of hydrocarbon groups may also be more than or equal to any one of the above-described lower limits, less than or equal to any one of the above-described upper limits, or within a range between any one of the above-described lower limits and any one of the above-described upper limits.

The oil-modified compound may have various forms if it contains the hydroxy group and hydrocarbon group.

In one example, the oil-modified compound may be a compound in the form that at least some of hydrogen atoms

of a hydrocarbon compound such as an alkane, alkene or alkyne are substituted with the hydroxy groups and/or the hydrocarbon groups. The number of carbon atoms in the hydrocarbon compound such as the alkane, alkene or alkyne may be, for example, 1 to 20, 1 to 16, 1 to 8, or 4 to 6. Such a hydrocarbon compound such as the alkane, alkene or alkyne may be linear, branched, or cyclic. In addition, the hydroxyl groups and/or hydrocarbon groups in the alkane, alkene, or alkyne may be substituted on the same carbon atom, or may also be substituted on different carbon atoms.

In another example, the reactive compound may be a compound having a polyester skeleton or a polyether skeleton. In this case, the reactive compound may be an oligomeric compound or a polymeric compound.

In one example, when the reactive compound having the polyester skeleton is a polyol compound, the relevant compound is a so-called polyester polyol, and may be a polyol having a structure in which the hydrocarbon group is linked to this polyester polyol.

In addition, when the reactive compound having the polyether skeleton is a polyol compound, the relevant compound is a so-called polyether polyol, and may be a polyol having a structure in which the hydrocarbon group is linked to this polyether polyol.

In one example, the polyester skeleton may be a so-called polycaprolactone skeleton, and the polyether skeleton may be a so-called polyalkylene skeleton.

In one example, the polyester skeleton may be a skeleton having a repeating unit represented by Formula 2 below.

[Formula 2]

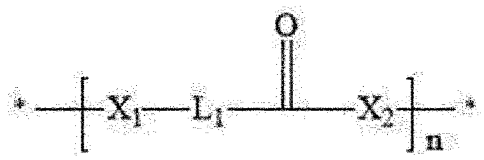

In Formula 2, $X_1$ and $X_2$ are each independently a single bond or an oxygen atom, $L_1$ may be an alkylene group or an alkylidene group, and n is an arbitrary number.

In this specification, the term single bond means a case where no atom exists at the relevant site.

In Formula 2, the alkylene group may be, in one example, an alkylene group having 2 to 20 carbon atoms, 4 to 20 carbon atoms, 4 to 16 carbon atoms, 4 to 12 carbon atoms, or 4 to 8 carbon atoms, which may be linear or branched.

**In** Formula 2, the alkylidene group may be, in one example, an alkylidene group having 1 to 20 carbon atoms, 4 to 20 carbon atoms, 4 to 16 carbon atoms, 4 to 12 carbon atoms, or 4 to 8 carbon atoms, which may be linear or branched.

**In** this specification, both the alkylene group and the alkylidene group mean divalent substituents formed by leaving two hydrogen atoms in the alkane. The alkylene group and the alkylidene group are distinct from each other that the alkylene group is a divalent substituent formed by leaving the two hydrogen atoms from different carbon atoms of the alkane, and the alkylidene group is a divalent substituent formed by leaving the two hydrogen atoms from one carbon atom of the alkane.

In one example, the polyester skeleton may be a polycaprolactone skeleton, and in this case, $L_1$ of Formula 2 above may be a linear alkylene group with 5 carbon atoms or a linear alkylidene group with 5 carbon atoms.

In Formula 2, n is an arbitrary number representing the number of repeating units. The lower limit of n above may be, for example, 1, 2, 3, 4, or 4.5 or so, and the upper limit may be 25, 20, 15, 10, or 5 or so. n above may also be more than or equal to any one lower limit of the above-described lower limits, less than or equal to any one upper limit of the above-described upper limits, or in a range between any one lower limit of the above-described lower limits and any one upper limit of the above-described upper limits.

The skeleton of Formula 2 may be a so-called carboxylic acid polyol skeleton or caprolactone polyol skeleton. Such a skeleton may be formed in a known manner, and for example, the skeleton of the carboxylic acid polyol may be formed by reacting a component comprising a carboxylic acid and a polyol (e.g., diol or triol, etc.), and the skeleton of the caprolactone polyol may be formed by reacting a component comprising a caprolactone and a polyol (e.g., diol or triol, etc.). The carboxylic acid may be a dicarboxylic acid.

In the oil-modified compound having the skeleton of Formula 2, a hydroxyl group or the above-described hydrocarbon group may be present at the end of the skeleton of Formula 2.

In this case, the skeleton of Formula 2 above may be represented by Formula 3 below.

[Formula 3]

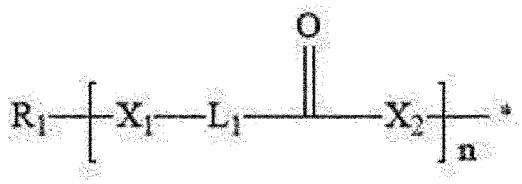

In Formula 3, $X_1$, $X_2$, $L_1$, and n are as defined in Formula 2, and $R_1$ may be a hydroxyl group or a substituent of Formula 4 below.

[Formula 4]

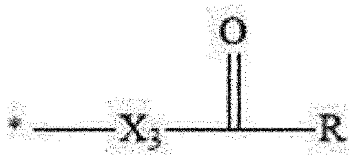

In Formula 4, $X_3$ is a single bond or an oxygen atom, and R is the same as R of Formula 1 above.
When $R_1$ in Formula 3 is a hydroxy group, $X_1$ may be a single bond, and $X_2$ may be an oxygen atom; and when $R_1$ is a substituent of Formula 4 above, either one of $X_1$ and $X_3$ may be a single bond, and the other may be an oxygen atom.
In the oil-modified compound, the lower limit of the number of skeletons of Formula 2 or 3 above may be 1 or 2 or so, and the upper limit may be 10, 9, 8, 7, 6, 5, 4, 3, or 2 or so. The number of skeletons may also be more than or equal to any one lower limit of the above-described lower limits, less than or equal to any one upper limit of the above-described upper limits, or in a range between any one lower limit of the above-described lower limits and any one upper limit of the above-described upper limits.
The oil-modified compound having the polyester skeleton may have a linear or branched structure.
Here, the linear structure is a structure in which a main chain including a skeleton of Formula 2 or 3 above is present and no other polymer chain is linked to the main chain, and the branched structure may be in a form that as a side chain, a chain including a skeleton of Formula 2 or 3 above is bonded to the main chain including a skeleton of Formula 2 or 3 above. Here, in the branched structure, the number of chains including the skeleton of Formula 2 or 3 above linked as the side chain may be, for example, 1 to 5, 1 to 4, 1 to 3, 1 to 2, or 1.
In one example, the oil-modified compound having a polyester skeleton may be a compound in the form that at least some of hydrogen atoms of a hydrocarbon compound such as an alkane, alkene or alkyne are substituted with the hydroxyl group and/or the skeleton of Formula 3 above. The number of carbon atoms in the hydrocarbon compound such as the alkane, alkene or alkyne may be, for example, 1 to 20, 1 to 16, 1 to 8, or 4 to 6.
Such a hydrocarbon compound such as the alkane, alkene or alkyne may be linear, branched, or cyclic. In addition, the hydroxyl group and/or the skeleton of Formula 3 may be substituted on the same carbon atom in the alkane, alkene, or alkyne, or may also be substituted on different carbon atoms.
In one example, the polyether skeleton may be a skeleton having a repeating unit of Formula 5 below.

[Formula 5]

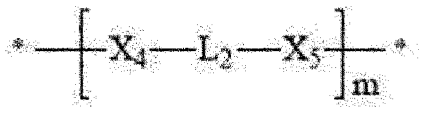

In Formula 5, $X_4$ and $X_5$ are each independently a single bond or an oxygen atom, $L_2$ may be an alkylene group or an alkylidene group, and m is an arbitrary number.
In Formula 5, the alkylene group may be, in one example, an alkylene group having 2 to 20 carbon atoms, 2 to 16 carbon atoms, 2 to 12 carbon atoms, 2 to 8 carbon atoms, or 2 to 4 carbon atoms, which may be linear or branched.
In Formula 5, the alkylidene group may be, in one example, an alkylidene group having 1 to 20 carbon atoms, 1 to 16 carbon atoms, 1 to 12 carbon atoms, 1 to 8 carbon atoms, or 1 to 4 carbon atoms, which may be linear or branched.
The meanings of the alkylene group and the alkylidene group are as described above.
In Formula 5, m is an arbitrary number representing the number of repeating units, which may be, for example, a

number within the range of 1 to 25.

In the oil-modified compound having a skeleton of Formula 5, the hydroxyl group or the above-described hydrocarbon group may be present at the end of the skeleton of Formula 5 above.

In this case, the skeleton of Formula 5 may be represented by Formula 6 below.

[Formula 6]

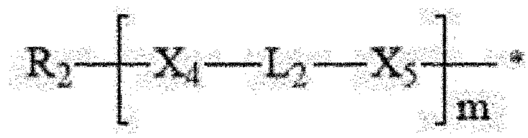

In Formula 6, $X_4$, $X_5$, $L_2$ and m are as defined in Formula 5, and $R_2$ may be a hydroxyl group or a substituent of Formula 7 below.

[Formula 7]

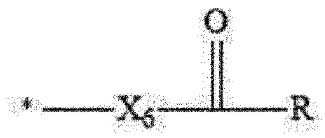

In Formula 7, $X_6$ is a single bond or an oxygen atom, and R is the same as R in Formula 1 above.

When $R_2$ in Formula 6 is a hydroxy group, $X_4$ is a single bond, and when $R_2$ is a substituent of Formula 7, either one of $X_4$ and $X_6$ is a single bond, and the other is an oxygen atom.

The oil-modified compound may include one or more, or two or more skeletons of Formula 5 or 6 above. The skeleton of Formula 5 or 6 above may be included in the polyol compound in the number of 10 or less, 9 or less, 8 or less, 7 or less, 6 or less, 5 or less, 4 or less, 3 or less, or 2 or less.

The polyol compound having the polyether skeleton may have a linear or branched structure.

Here, the linear structure may be a structure in which a main chain including a skeleton of Formula 5 or 6 above is present and no other polymer chain is linked to the main chain, and the branched structure may be in a form that as a side chain, a chain including a skeleton of Formula 5 or 6 above is bonded to a main chain including a skeleton of Formula 5 or 6 above. Here, in the branched structure, the number of chains containing the skeleton of Formula 5 or 6 above linked as side chains may be, for example, 1 to 5, 1 to 4, 1 to 3, 1 to 2, or 1.

In one example, the oil-modified compound having the polyether skeleton may be a compound in the form that at least some of hydrogen atoms of a hydrocarbon compound such as an alkane, alkene or alkyne are substituted with a hydroxyl group and/or a skeleton of Formula 5 above. The number of carbon atoms in the hydrocarbon compound such as the alkane, alkene or alkyne may be, for example, 1 to 20, 1 to 16, 1 to 8, or 4 to 6.

Such a hydrocarbon compound such as the alkane, alkene or alkyne may be linear, branched, or cyclic. In addition, the hydroxy group and/or the skeleton of Formula 5 may be substituted on the same carbon atom in the alkane, alkene, or alkyne, or may also be substituted on different carbon atoms.

When the above-described oil-modified compound is an oligomeric or polymeric compound, the relevant compound may have an appropriate level of molecular weight.

For example, the lower limit of the weight average molecular weight of the oligomeric or polymeric oil-modified compound may be 100 g/mol, 200 g/mol, 300 g/mol, 400 g/mol, 500 g/mol, 600 g/mol, or 700 g/mol or so, and the upper limit thereof may also be 3,000 g/mol, 2500 g/mol, 2000 g/mol, 1500 g/mol, 1000 g/mol, or 900 g/mol or so. The weight average molecular weight may also be more than or equal to any one of the above-described lower limits, less than or equal to any one of the above-described upper limits, or within a range between any one of the above-described lower limits and any one of the above-described upper limits.

By applying the oil-modified compound as described above, it is possible to more effectively secure desired physical properties.

The oil-modified compound may be present in an appropriate ratio in the resin composition. For example, the lower limit of the ratio of the oil-modified compound in the resin composition may be 50 weight%, 55 weight%, 60 weight%, 65 weight%, 70 weight%, 75 weight%, 80 weight%, or 85 weight% or so, and the upper limit thereof may be 95 weight%, or 90 weight% or so. The ratio may also be more than or equal to any one of the above-described lower limits, less than or

equal to any one of the above-described upper limits, or within a range between any one of the above-described lower limits and any one of the above-described upper limits.

When the resin composition is a one-component type, the content of the oil-modified compound is the content in the relevant one-component composition, and when the resin composition is a two-component composition, it is the content in the part in which the oil-modified compound is present. For example, when the two-component composition comprises a main part and a curing agent part, which are physically separated, and the oil-modified compound is included in the main part, the content of the oil-modified compound may be a content based on the total weight of the main part. Also, when the resin composition comprises a solvent and/or a filler, the content is a content based on the weight excluding the content of the solvent and filler.

In another example, when the resin composition comprises a filler component to be described below, the lower limit of the weight ratio of the oil-modified compound relative to 100 parts by weight of the filler component may be 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be 30 parts by weight, 28 parts by weight, 26 parts by weight, 24 parts by weight, 22 parts by weight, 20 parts by weight, 18 parts by weight, 16 parts by weight, 14 parts by weight, or 12 parts by weight or so. The ratio may also be more than or equal to any one of the above-described lower limits, less than or equal to any one of the above-described upper limits, or within a range between any one of the above-described lower limits and any one of the above-described upper limits.

When the resin composition is a one-component type, the ratio of the filler component is the ratio relative to 100 parts by weight of the total filler component contained in the relevant resin composition, and when it is a two-component type, it is a ratio relative to 100 parts by weight of the total filler component present in the part (main part or curing agent part) in which the oil-modified polyol is contained.

The oil-modified compound may be synthesized through a known synthesis method. That is, the compounds may be prepared by reacting a compound capable of introducing the hydrocarbon group corresponding to the oil-modified portion with a known polyol compound or alcohol compound. Here, the polyol compound is a compound having two or more hydroxy groups per molecule, and the alcohol compound is a compound having one hydroxy group per molecule. Here, the compound capable of introducing the hydrocarbon group may be exemplified by saturated or unsaturated fatty acids, and specifically, may be exemplified by butyric acid, caproic acid, 2-ethylhexanoic acid, caprylic acid, isononanoic acid, capric acid, lauric acid, myristic acid, palmitic acid, stearic acid, linoleic acid, or oleic acid, and the like, but is not limited thereto.

In addition, the type of polyol or alcohol compound reacting with the saturated or unsaturated fatty acid is not particularly limited, and for example, an appropriate type of general reactive compounds to be described below may be applied, but is not limited thereto.

The reactive compound having hydroxy may further comprise a reactive compound different from the oil-modified compound. In this case, the reactive compound does not contain the above-described hydrocarbon group, that is, the linear or branched hydrocarbon group having 3 or more carbon atoms. For convenience, such a reactive compound may be referred to as a non-oil-modified compound in this specification.

The non-oil-modified compound also contains one or more hydroxy groups per molecule. The lower limit of the number of hydroxy groups contained in the non-oil-modified compound may be 1, 2, or 3 or so, and the upper limit thereof may be 10, 9, 8, 7, 6, 5, 4, 3, or 2 or so. The number of hydroxy groups may also be more than or equal to any one of the above-described lower limits, less than or equal to any one of the above-described upper limits, or within a range between any one of the above-described lower limits and any one of the above-described upper limits.

The non-oil-modified compound may also be a monomolecular, oligomeric or polymeric compound.

The non-oil-modified compound may have various forms.

In one example, the non-oil-modified compound may be a polyester polyol. As the polyester polyol, for example, a so-called carboxylic acid polyol or caprolactone polyol may be used.

In one example, the polyester polyol may be a skeleton having a repeating unit represented by Formula 8 below.

[Formula 8]

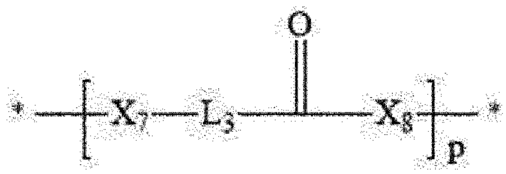

In Formula 8, $X_7$ and $X_8$ are each independently a single bond or an oxygen atom, $L_3$ may be an alkylene group or an alkylidene group, and p is an arbitrary number.

In Formula 8, the alkylidene group may be, in one example, an alkylene group having 1 to 20 carbon atoms, 4 to 20

carbon atoms, 4 to 16 carbon atoms, 4 to 12 carbon atoms, or 4 to 8 carbon atoms, which may be linear or branched.

In Formula 8, the alkylene group may be, in one example, an alkylene group having 2 to 20 carbon atoms, 4 to 20 carbon atoms, 4 to 16 carbon atoms, 4 to 12 carbon atoms, or 4 to 8 carbon atoms, which may be linear or branched.

When the polyester polyol is a polycaprolactone polyol, $L_3$ of Formula 8 above may be a linear alkylene group with 5 carbon atoms.

Also, in Formula 8 above, p is an arbitrary number representing the number of repeating units, which may be, for example, a number within the range of 1 to 25.

The polyester polyol having the skeleton of Formula 8 above may be a so-called carboxylic acid polyol or caprolactone polyol. Such a polyol compound may be formed by a known method, and for example, the carboxylic acid polyol may be formed by reacting a component including a carboxylic acid and a polyol (e.g., diol or triol, etc.), and the caprolactone polyol may be formed by reacting a component including caprolactone and a polyol (e.g., diol or triol, etc.). The carboxylic acid may be a dicarboxylic acid.

In the polyol compound having the skeleton of Formula 8 above, the hydroxyl group may be present at the terminal of the skeleton of Formula 8 above or at another site of the polyester polyol.

When the non-oil-modified compound comprises the skeleton of Formula 8 above, the lower limit of the number of the relevant skeletons may be 1, or 2 or so, and the upper limit thereof may also be 10, 9, 8, 7, 6, 5, 4, 3, 2, or 1 or so. The number of skeletons may also be more than or equal to any one of the above-described lower limits, less than or equal to any one of the above-described upper limits, or within a range between any one of the above-described lower limits and any one of the above-described upper limits.

The polyol compound having a polyester skeleton may have a linear or branched structure.

Here, the linear structure may be a structure in which a main chain including the skeleton of Formula 8 above is present and no other polymer chain is linked to the main chain, and the branched structure may be in a form that as side chains, chains including the skeleton of Formula 8 above are bonded to a main chain including the skeleton of Formula 8 above. In the branched structure, the number of chains containing the skeleton of Formula 8 above linked as the side chains may be, for example, 1 to 5, 1 to 4, 1 to 3, 1 to 2, or 1.

In another example, a polyol having a polycaprolactone polyol unit or an alkane diol unit, a polyol unit, and a dicarboxylic acid unit may also be used as the non-oil-modified compound. Such a polyol may be a mixture of the above polycaprolactone polyol unit or alkane diol, polyol and dicarboxylic acid, or a reaction product thereof. At this time, the alkane diol may be exemplified by a diol compound with 1 to 20 carbon atoms, 4 to 20 carbon atoms, 4 to 16 carbon atoms, or 4 to 12 carbon atoms, such as 3-methyl-1,5-pentanediol, 1,9-nonanediol or 1,6-hexanediol. In addition, the polyol unit may be exemplified by an alkane or polycarbon with 1 to 20 carbon atoms, 4 to 20 carbon atoms, 4 to 16 carbon atoms or 4 to 12 carbon atoms substituted with 3 to 10, 3 to 9, 3 to 8, 3 to 7, 3 to 6, 3 to 5, or 3 to 4 hydroxyl groups, such as trimethylolpropane. In addition, the dicarboxylic acid may be exemplified by adipic acid, terephthalic acid, isophthalic acid, or sebacic acid, and the like. The polyol compound of this kind is known as, for example, product names of Kuraray's P-510, P-1010, P-2010, P-3010, P-4010, P-5010, P-6010, F-510, F-1010, F- 2010, F-3010, P-2011, P-520, P-2020, P-1012, P-2012, P-630, P-2030, P-2050, or N-2010, and the like.

As such a non-oil-modified compound, a polyol having a weight average molecular weight in a range of 100 g/mol to 5,000 g/mol may be used. The desired effect can be more effectively achieved through the application of such a polyol.

The curable component in the curable composition of the present application may be composed of any one of the above-described reactive compounds, or may be composed of a mixture of two or more of the foregoing.

In one example, the curable component may comprise a monofunctional compound (may be referred to as a first reactive compound) and a polyfunctional compound (may be referred to as a second reactive compound) among the above-described reactive compounds. At this time, the monofunctional compound and the polyfunctional compound may each independently be the oil-modified compound, or the non-oil-modified compound.

In this case, the lower limit of the weight ratio of the monofunctional compound relative to 100 parts by weight of the polyfunctional compound may be, for example, 10 parts by weight, 20 parts by weight, 30 parts by weight, 40 parts by weight, 50 parts by weight, 60 parts by weight, 70 parts by weight, 80 parts by weight, or 95 parts by weight or so, and the upper limit thereof may be, for example, 200 parts by weight, 190 parts by weight, 180 parts by weight, 170 parts by weight, 160 parts by weight, 150 parts by weight, 140 parts by weight, 130 parts by weight, 120 parts by weight, 110 parts by weight, or 105 parts by weight or so. The ratio may also be more than or equal to any one of the above-described lower limits, less than or equal to any one of the above-described upper limits, or within a range between any one of the above-described lower limits and any one of the above-described upper limits.

In the above case, the curable component may comprise, as the second reactive compound, a reactive compound having two hydroxy groups (may be referred to as a third reactive compound) and a reactive compound having three or more hydroxy groups (may be referred to as a fourth reactive compound). The upper limit of the number of hydroxy groups contained in the fourth reactive compound may also be 10, 9, 8, 7, 6, 5, 4, or 3 or so per molecule. The number of hydroxy groups in the fourth reactive compound may be less than or equal to any one of the above-described upper limits while being 3 or more.

In this case, the lower limit of the weight ratio of the fourth reactive compound relative to 100 parts by weight of the third reactive compound may be, for example, 1 part by weight, 2 parts by weight, 3 parts by weight, 4 parts by weight, 5 parts by weight, 6 parts by weight, 7 parts by weight, 8 parts by weight, 9 parts by weight, or 10 parts by weight or so, and the upper limit thereof may be, for example, 20 parts by weight, 19 parts by weight, 18 parts by weight, 17 parts by weight, 16 parts by weight, 15 parts by weight, 14 parts by weight, 13 parts by weight, or 12 parts by weight or so. The ratio may also be more than or equal to any one of the above-described lower limits, less than or equal to any one of the above-described upper limits, or within a range between any one of the above-described lower limits and any one of the above-described upper limits.

The first to fourth reactive compounds may each independently be the oil-modified compound or the non-oil-modified compound, as described above.

In an appropriate example, the first and third reactive compounds among the first to fourth reactive compounds may be oil-modified compounds.

In this case, the fourth reactive compound may be an oil-modified compound or a non-oil-modified compound, and in an appropriate example, it may be the non-oil-modified compound. As the non-oil-modified compound, for example, a compound containing the polycaprolactone polyol unit or alkanediol unit; the polyol unit and dicarboxylic acid unit, as described above, may be used.

The resin composition may comprise, as an additional component, for example, a curing agent that reacts with the curable component.

As the curing agent, various types may be applied, but when the resin composition is the polyurethane composition, a polyisocyanate (may also be referred to as a polyisocyanate compound) may be applied as the curing agent. The term polyisocyanate means a compound having two or more isocyanate groups. The lower limit of the number of isocyanate groups in the polyisocyanate may be 2 or 3 or so, and the upper limit thereof may be 10, 9, 8, 7, 6, 5, 4, 3 or 2 or so. The number of isocyanate groups may also be more than or equal to any one of the above-described lower limits, less than or equal to any one of the above-described upper limits, or within a range between any one of the above-described lower limits and any one of the above-described upper limits.

The type of polyisocyanate used as the curing agent is not particularly limited, but a non-aromatic polyisocyanate containing no aromatic group may be used to secure desired physical properties.

In addition, if necessary, as the polyisocyanate, a polyisocyanate with bifunctionality and a polyisocyanate with trifunctionality or more may also be applied together. Here, the bifunctionality means that the compound contains two isocyanate groups, and the trifunctionality means that the compound contains three or more isocyanate groups.

As the polyisocyanate compound, for example, aliphatic polyisocyanates such as hexamethylene diisocyanate, trimethylhexamethylene diisocyanate, lysine diisocyanate, norbornane diisocyanate methyl, ethylene diisocyanate, propylene diisocyanate, or tetramethylene diisocyanate; alicyclic polyisocyanates such as transcyclohexane-1,4-diisocyanate, isophorone diisocyanate, bis(isocyanatemethyl)cyclohexane diisocyanate, or dicyclohexylmethane diisocyanate; or one or more carbodiimide-modified polyisocyanates or isocyanurate-modified polyisocyanates of the foregoing, and the like may be used. In addition, as the polyisocyanate, addition reaction products of the diisocyanate and polyol (for example, trimethylol propane, etc.) as described above may also be used. Furthermore, a mixture of two or more of the above-listed compounds may be used.

The application rate of the polyisocyanate may be adjusted considering the number of hydroxy groups present in the curable component included in the resin composition, and physical properties after curing.

For example, the polyisocyanate may be included in the resin composition so that an equivalent ratio (OH/NCO) of the number (OH) of hydroxy groups present in the curable component to the number (NCO) of isocyanate groups present in the polyisocyanate (NCO)may be within a predetermined range.

A method for calculating the equivalent ratio (OH/NCO) is known.

For example, if the resin composition is a two-component type, the curable component is included in the main part, and the polyisocyanate is included in the curing agent part, the equivalent ratio OH/NCO can be calculated according to the following general equation 1.

[General Equation 1]

$$E = \frac{D_m \times A}{D_c \times B} \times \frac{D_{NCO}}{D_{OH}}$$

In General Equation 1, E is the equivalent ratio OH/NCO, $D_m$ is the density of the main part, $D_c$ is the density of the curing agent part, A is obtained according to General Equation 2 below, B is obtained according to General Equation 3 below, $D_{NCO}$ is the dalton mass of the isocyanate group, which is 42 Da, and $D_{OH}$ is the dalton mass of the hydroxy group,

which is 17 Da.

[General Equation 2]

$$A = \sum (W_{OH} \times OH_{\%})$$

In General Equation 2, $W_{OH}$ is the weight ratio of the reactive compound present in the main part, and $OH_{\%}$ is the ratio of the hydroxy group included in the reactive compound having the weight ratio of $W_{OH}$.

[General Equation 3]

$$B = \sum (W_{NCO} \times NCO_{\%})$$

In General Equation 3, $W_{NCO}$ is the weight ratio of the polyisocyanate present in the curing agent part, and $NCO_{\%}$ is the ratio of the isocyanate group included in the polyisocyanate having the weight ratio of $W_{NCO}$.

Here, $W_{OH}$ is the weight% (based on the total weight of the main part) in the main part of each reactive compound present in the main part, and OH% of the relevant compound is the % of the hydroxy group contained in 1 mole of each reactive compound, which is obtained by dividing the product of the molar number of hydroxy groups included in a single reactive compound and the molar mass of the hydroxy group by the molar mass of the single reactive compound and then multiplying by 100.

Here, $W_{NCO}$ is the weight% (based on the total weight of the curing agent part) in the curing agent part of each polyisocyanate present in the curing agent part, and NCO% of the relevant compound is the % of the NCO group included in 1 mole of each polyisocyanate, which is obtained by dividing the product of the molar number of NCO groups included in a single polyisocyanate and the molar mass of the NCO group by the molar mass of the single polyisocyanate and then multiplying by 100.

In General Equation 1, the dalton mass is a constant.

The lower limit of the equivalent ratio (OH/NCO) may be, for example, 50, 60, 70, 80, 90, 100, 110, 120, 130, 140, 150, 160, 170, 180, 190, 200, 210, 220, 230, 240, 250, or 260 or so, and the upper limit thereof may also be, for example, 1,000, 900, 800, 700, 600, 500, 400, 300, 290, 280, 270, 260, 250, 240, 230, 220, 210, 200, 190, 180, 170, 160, 150, 140, 130, 120, 110, or 100 or so. The equivalent ratio may also be more than or equal to any one of the above-described lower limits, less than or equal to any one of the above-described upper limits, or within a range between any one of the above-described lower limits and any one of the above-described upper limits.

The resin composition may further comprise a filler component. The term filler component means a component composed of a filler, that is, a component comprising only a filler.

In one example, the filler component may comprise two or more fillers having different average particle diameters. In one example, the filler component may comprise three or more fillers having different average particle diameters, or may be composed of three to six, three to five, three to four, or three fillers, having different average particle diameters. That is, in one example, the filler component may also comprise only three to six, three to five, three to four, or three fillers, having different average particle diameters.

In another example, the filler component may exhibit at least two peaks in a volume curve of a particle size distribution measured using laser diffraction. In one example, the filler component may exhibit three or more peaks in the volume curve of the particle size distribution, or may exhibit three to six, three to five, three to four, or three peaks. For example, in the range of the filler component exhibiting three peaks, the filler component exhibiting one, two, or four or more peaks is not included.

The average particle diameter in the filler of the present application means a particle diameter at which the volume accumulation becomes 50% in the volume curve of the particle size distribution measured by laser diffraction, which may also be referred to as a median diameter. That is, in the present application, the particle size distribution is obtained on a volume basis through the laser diffraction, and the particle diameter at the point where the cumulative value becomes 50% in the cumulative curve with 100% of the total volume is set as the average particle diameter, and in another example, such an average particle diameter may be referred to as a median particle size or a D50 particle diameter.

Therefore, here, the two fillers having different average particle diameters may mean fillers having different particle diameters at the point where the cumulative value becomes 50% in the volume curve of the particle size distribution.

When two or more fillers having different average particle diameters are usually mixed to form a filler component, as many peaks as the types of mixed fillers appear on the volume curve of the particle size distribution measured using

laser diffraction with respect to the filler component. Therefore, for example, when three fillers having different average particle diameters are mixed to constitute a filler component, the volume curve of the particle size distribution measured using the laser diffraction regarding the filler component shows three peaks.

The filler component of the resin composition of the present application may be a thermally conductive filler component. The term thermally conductive filler component means a filler component functioning so that the resin composition or the cured body thereof exhibits the above-described thermal conductivity.

In one example, the filler component may comprise at least a first filler having an average particle diameter of 60 μm to 200 μm, a second filler having an average particle diameter in a range of 10 μm to 30 μm, and a third filler having an average particle diameter of 5 μm or less.

As another example, the first filler may have an average particle diameter of about 62 μm or more, 64 μm or more, 66 μm or more, or about 68 μm or more, and/or about 195 μm or less, 190 μm or less, 185 μm or less, 180 μm or less, 175 μm or less, 170 μm or less, 165 μm or less, 160 μm or less, 155 μm or less, 150 μm or less, 145 μm or less, 140 μm or less, 135 μm or less, 130 μm or less, 125 μm or less, about 120 μm or less, 115 μm or less, 110 μm or less, 105 μm or less, 100 μm or less, 95 μm or less, 90 μm or less, 85 μm or less, 80 μm or less, or about 75 μm or less.

As another example, the second filler may have an average particle diameter of about 12 μm or more, 13 μm or more, 14 μm or more, 15 μm or more, 16 μm or more, 17 μm or more, 18 μm or more, 19 μm or more, or 20 μm or more, and/ or about 29 μm or less, 28 μm or less, 27 μm or less, 26 μm or less, 25 μm or less, 24 μm or less, 23 μm or less, 22 μm or less, 21 μm or less, or about 20 μm or less.

As another example, the third filler may have an average particle diameter of about 0.01 μm or more, 0.1 μm or more, about 0.5 μm or more, 1 μm or more, 1.5 μm or more, or 2 μm or more, and/or about 5 μm or less, 4.5 μm or less, about 4 μm or less, 3.5 μm or less, 3 μm or less, 2.5 μm or less, or 2 μm or less or so.

The ratio (D1/D3) of the average particle diameter (D1) of the first filler to the average particle diameter (D3) of the third filler in the filler component may be in a range of 25 to 300.

In one example, the third filler may be a filler having the smallest average particle diameter among fillers included in the filler component when the filler component comprises two or more fillers having different average particle diameters, and the first filler may be a filler having the largest average particle diameter among fillers included in the filler component when the filler component comprises two or more fillers having different average particle diameters. In such a state, the particle diameter ratio may be satisfied.

In another example, the ratio (D1/D3) may also further be adjusted within a range of 26 or more, 27 or more, 28 or more, 29 or more, 30 or more, 31 or more, 32 or more, 33 or more, 34 or more, 35 or more, 40 or more, 50 or more, 60 or more. 70 or more, 80 or more, 90 or more, 100 or more, 110 or more, 120 or more, 130 or more, 140 or more, 150 or more, 160 or more, 170 or more, 180 or more, 190 or more, 200 or more, 210 or more, 220 or more, 230 or more, or 235 or more and/or within a range of 290 or less, 280 or less, 270 or less, 260 or less, 250 or less, 240 or less, 220 or less, 200 or less, 180 or less, 160 or less, 140 or less, 120 or less, about 100 or less, 95 or less, 90 or less, 85 or less, 80 or less, about 75 or less, 70 or less, 65 or less, or about 60 or less.

In the filler component, the ratio (D1/D2) of the average particle diameter (D1) of the first filler and the average particle diameter (D2) of the second filler may be in the range of about 3 to 20. In another example, the ratio (D1/D2) may be 3.1 or more, 3.2 or more, 3.3 or more, 3.4 or more, or 3.5 or more, or may also be 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, or 4 or less or so.

As the filler, for example, a ceramic material such as aluminum oxide (alumina: $Al_2O_3$), aluminum nitride (AlN), boron nitride (BN), silicon nitride ($Si_3N_4$), silicon carbide (SiC), beryllium oxide (BeO), zinc oxide (ZnO), magnesium oxide (MgO), aluminum hydroxide ($Al(OH)_3$), magnesium hydroxide ($Mg(OH)_2$), calcium carbonate ($CaCO_3$) and/or boehmite may be used. Such a filler is advantageous in satisfying the thermal conductivity within the above-mentioned range, and additionally, the above-described insulation properties and the like may also be satisfied through the application of a ceramic filler.

The upper limit of the ratio of the filler component in the resin composition may be 95 weight%, 94.5 weight%, 94 weight%, 93.5 weight%, 93 weight%, 92.5 weight%, 92 weight%, 91.5 weight%, 91 weight%, 90.5 weight%, 90.0 weight%, 89.5 weight%, or 89.0 weight% or so, and the lower limit thereof may be 70 weight%, 71 weight%, 72 weight%, 73 weight%, 74 weight%, about 75 weight%, 76 weight%, 77 weight%, 78 weight%, 79 weight%, 80 weight%, 81 weight%, 82 weight%, 83 weight%, 84 weight%, 85 weight%, 86 weight%, 87 weight%, or 88 weight% or so. The ratio may also be more than or equal to any one of the above-described lower limits, less than or equal to any one of the above-described upper limits, or within a range between any one of the above-described lower limits and any one of the above-described upper limits.

The lower limit of the ratio of the filler component relative to the total weight of 100 parts by weight of the curable component or the reactive compounds present in the curable component may be 500 parts by weight, 550 parts by weight, 600 parts by weight, 650 parts by weight, 700 parts by weight, 750 parts by weight, 800 parts by weight, or 850 parts by weight or so, and the upper limit thereof may be 2,000 parts by weight, 1,800 parts by weight, 1,600 parts by weight, 1,400 parts by weight, 1,200 parts by weight, 1,000 parts by weight, 950 parts by weight, or 900 parts by weight or so. The ratio

may also be more than or equal to any one of the above-described lower limits, less than or equal to any one of the above-described upper limits, or within a range between any one of the above-described lower limits and any one of the above-described upper limits.

When the resin composition is a one-component composition, the content of the filler component may be a ratio based on the total weight of the relevant resin composition, and in the case of a two-component resin composition, it may be a ratio based on the combined weight of the main part and the curing agent part of the two-component composition, or may be a ratio based on the total weight of the main part or the curing agent part alone.

When the resin composition is composed of the two-component composition, it may be appropriate that the filler component to be applied to the final cured body as the filler component is divided in substantially equal amounts and introduced into the main and curing agent parts, respectively.

The filler component may comprise various types of fillers, if necessary, in addition to the thermally conductive filler, and for example, a carbon filler such as graphite, fumed silica, or clay, and the like may be applied.

The resin composition may further comprise necessary components in addition to the above-described components.

In one example, the resin composition may further comprise a plasticizer. As described above, in the present application, it is possible to secure low adhesion force to a specific material without applying a plasticizer, but a small amount of plasticizer may also be applied if necessary.

The type of the applicable plasticizer is not particularly limited, and for example, a phthalate-based plasticizer such as dioctyl phthalate (DOP), dibutyl phthalate (DBP), butylbenzyl phthalate (BBP), diisononyl phthalate (DINP) or polyethylene terephthalate (PET), an adipate-based plasticizer such as dioctyl adipate (DOA) or diisononyl adipate (DINA), a fatty acid-based plasticizer, a phosphoric acid-based plasticizer, or a polyester-based plasticizer, and the like may be applied.

When the plasticizer is included, the ratio may be adjusted depending on the purpose. For example, the lower limit of the ratio of the plasticizer relative to 100 parts by weight of the total weight of the curable component or the reactive compounds present in the curable component may be 0.5 parts by weight, 1 part by weight, 1.5 parts by weight, 2 parts by weight, 2.5 parts by weight, 3 parts by weight, 3.5 parts by weight, 4 parts by weight, 4.5 parts by weight, 5 parts by weight, 5.5 parts by weight, 6 parts by weight, or 6.5 parts by weight or so, and the upper limit thereof may also be 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, or 7 parts by weight or so. The ratio may also be more than or equal to any one of the above-described lower limits, less than or equal to any one of the above-described upper limits, or within a range between any one of the above-described lower limits and any one of the above-described upper limits. The above ratio may be changed considering the composition of the entire resin composition or the intended use.

The resin composition may comprise a catalyst as an additional component. The type of catalyst, which may be included, is not particularly limited if it may induce appropriate curing depending on the type of the curing component. For example, when the resin composition is a polyurethane composition and the curable component is a component forming a polyurethane, a urethane reaction catalyst may be applied as the catalyst.

The urethane reaction catalyst is not particularly limited, and known components may be used, and as an example thereof, organic catalysts such as tertiary amines, or organometallic catalysts may be applied. In terms of exerting an appropriate effect through combination with a curing rate regulator to be described below, an organometallic catalyst may be used as the catalyst, and for example, a tin catalyst such as an organic tin catalyst may be used.

When the catalyst is included, the ratio may be adjusted depending on the purpose. For example, the lower limit of the ratio of the catalyst relative to the total weight of 100 parts by weight of the curable component or the reactive compounds present in the curable component may be 0.001 parts by weight, 0.005 parts by weight, 0.01 parts by weight, 0.05 parts by weight, 0.1 parts by weight, 0.5 parts by weight, or 0.55 parts by weight or so, and the upper limit thereof may also be 10 parts by weight, 9 parts by weight, 8 parts by weight, 7 parts by weight, 6 parts by weight, 5 parts by weight, 4 parts by weight, 3 parts by weight, 2 parts by weight, 1 part by weight, or 0.05 part by weight or so. The ratio may also be more than or equal to any one of the above-described lower limits, less than or equal to any one of the above-described upper limits, or within a range between any one of the above-described lower limits and any one of the above-described upper limits. The above ratio may be changed considering the composition of the entire resin composition or the intended use.

The resin composition may comprise a curing rate regulator to ensure an appropriate curing rate. In the present application, the term curing rate regulator means a component capable of delaying the curing rate of the resin composition compared to the case where the relevant component does not exist. Typically, the curing of the resin composition begins to be induced when the components participating in the curing reaction are mixed under curable conditions. For example, if the resin composition is a room temperature curing type, and a two-component type containing a main part and a curing agent part, the resin composition begins to be cured when the main part and the curing agent part are mixed at room temperature.

However, depending on the use of the resin composition, there may be a problem if the curing rate is too fast after the curing initiation as above.

Therefore, in the present application, the curing rate regulator may be applied to ensure an appropriate curing rate when necessary. In this instance, the type of the applied curing rate regulator is not particularly limited. For example, components capable of exhibiting an effect of controlling the curing rate by competitively reacting with the curable component and the catalyst, and the like contained in the resin composition or exhibiting affinity may be applied.

When the resin composition is a polyurethane composition, a thiol compound or a carboxylic acid compound may be used as the curing rate regulator. As the curing rate regulator, any one of the thiol and carboxylic acid compounds may be used, or both may be used.

As the thiol compound, for example, a compound of Formula 9 below may be used.

[Formula 9] $R_1\text{-}R_2\text{-}SH$

In Formula 9, $R_1$ may be an alkyl group, an alkoxy group, an aromatic monovalent hydrocarbon group, or $-Si(R_3)_3$, and $R_2$ may be a single bond, an alkylene group, or an alkylidene group, where $R_3$ above may be hydrogen, an alkyl group, or an alkoxy group.

In Formula 9, the matter that $R_2$ is a single bond means a structure that $R_2$ does not exist and the thiol (SH) group is directly connected to $R_1$.

The alkyl group of $R_1$ or $R_3$ in Formula 9 may be an alkyl group with 1 to 20 carbon atoms, 1 to 16 carbon atoms, 1 to 12 carbon atoms, 1 to 8 carbon atoms, or 1 to 4 carbon atoms. Such an alkyl group may be linear, branched, or cyclic. The alkyl group may be optionally substituted with one or more substituents, or may be unsubstituted. When it is substituted, the substituent may be exemplified by a halogen atom, an alkoxy group with 1 to 4 carbon atoms, or a thiol group, and the like, but is not limited thereto.

The alkoxy group of $R_1$ or $R_3$ in Formula 9 may be an alkoxy group with 1 to 20 carbon atoms, 1 to 16 carbon atoms, 1 to 12 carbon atoms, 1 to 8 carbon atoms, or 1 to 4 carbon atoms. Such an alkoxy group may be linear, branched, or cyclic. The alkoxy group may be optionally substituted with one or more substituents, or may be unsubstituted. When it is substituted, the substituent may be exemplified by a halogen atom, an alkyl group with 1 to 4 carbon atoms, an alkoxy group with 1 to 4 carbon atoms, or a thiol group, and the like, but is not limited thereto.

Here, the aromatic monovalent hydrocarbon group may be exemplified by an aryl group or a heteroaryl group. At this time, the aryl group may be exemplified by a phenyl group, a biphenyl group, a naphthyl group, an anthracenyl group, a phenanthryl group, a pyrenyl group, a phenylenyl group, a chrysenyl group, or a fluorenyl group, and the like, and the heteroaryl group may be exemplified by a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyridopyrimidinyl group, a pyridopyrazinyl group, a pyrazinopyrazinyl group, an isoquinoline group, an indole group, a carbazole group, a benzoxazole group, a benzimidazole group, a benzothiazole group, a benzocarbazole group, a benzothiophene group, a dibenzothiophene group, a benzofuranyl group, a phenanthroline group, a thiazolyl group, an isoxazolyl group, an oxadiazolyl group, a thiadiazolyl group, or a dibenzofuranyl group, and the like, without being limited thereto. Such an aromatic monovalent hydrocarbon group may be optionally substituted with one or more substituents, or may be unsubstituted. When it is substituted, the substituent may be exemplified by a halogen atom, an alkyl group with 1 to 4 carbon atoms, an alkoxy group with 1 to 4 carbon atoms, or a thiol group, and the like, but is not limited thereto.

In one example, the alkylene group of $R_2$ in Formula 9 may be an alkylene group with 2 to 20 carbon atoms, 4 to 20 carbon atoms, 4 to 16 carbon atoms, 4 to 12 carbon atoms, or 4 to 8 carbon atoms, which may be linear or branched. Such an alkylene group may be optionally substituted with one or more substituents, or may be unsubstituted. When it is substituted, the substituent may be exemplified by a halogen atom, an alkyl group with 1 to 4 carbon atoms, an alkoxy group with 1 to 4 carbon atoms, or a thiol group, and the like, but is not limited thereto. Furthermore, in some cases, at least one of the carbon atoms constituting the alkylene group may also be substituted with an oxygen atom.

In one example, the alkylidene group of $R_2$ in Formula 9 may be an alkylidene group with 1 to 20 carbon atoms, 4 to 20 carbon atoms, 4 to 16 carbon atoms, 4 to 12 carbon atoms, or 4 to 8 carbon atoms, which may be linear or branched. Such an alkylidene group may be optionally substituted with one or more substituents, or may be unsubstituted. When it is substituted, the substituent may be exemplified by a halogen atom, an alkyl group with 1 to 4 carbon atoms, an alkoxy group with 1 to 4 carbon atoms, or a thiol group, and the like, but is not limited thereto. Furthermore, in some cases, at least one of the carbon atoms constituting the alkylidene group may also be substituted with an oxygen atom.

As the thiol compound, for example, a monofunctional compound having a hydrocarbon group may be used. The hydrocarbon group may be a substituted or unsubstituted hydrocarbon group. When the hydrocarbon group is a substituted hydrocarbon group, the type of substituent is not particularly limited, but it may include, for example, halogen, an alkoxy group with 1 to 4 carbon atoms, and/or a silyl group (e.g., a substituent represented by $-Si(R_3)_3$ of Formula 9

above), and the like. The matter that the thiol compound is a monofunctional compound means that the relevant compound contains one thiol group (-SH).

The hydrocarbon group of the thiol compound may be an alkyl group, an alkenyl group, or an alkynyl group. At this time, the alkyl group may be an alkyl group with 1 to 30 carbon atoms, 4 to 30 carbon atoms, 8 to 30 carbon atoms, 8 to 26 carbon atoms, 8 to 22 carbon atoms, 8 to 18 carbon atoms, or 8 to 14 carbon atoms, and this alkyl group may be linear or branched. The alkenyl group or alkynyl group may be an alkenyl group or alkynyl group with 2 to 30 carbon atoms, 4 to 30 carbon atoms, 8 to 30 carbon atoms, 8 to 26 carbon atoms, 8 to 22 carbon atoms, 8 to 18 carbon atoms, or 8 to 14 carbon atoms, and this alkenyl group or alkynyl group may be linear or branched.

The thiol compound may be a compound in which one of hydrogen atoms of a hydrocarbon compound such as an alkane, an alkene, or an alkyne is substituted with a thiol group (-SH). In this case, the alkane may be an alkane with 1 to 30 carbon atoms, 4 to 30 carbon atoms, 8 to 30 carbon atoms, 8 to 26 carbon atoms, 8 to 22 carbon atoms, 8 to 18 carbon atoms, or 8 to 14 carbon atoms, and this alkane may be linear or branched. The alkene or alkyne may be an alkene or alkyne with 2 to 30 carbon atoms, 4 to 30 carbon atoms, 8 to 30 carbon atoms, 8 to 26 carbon atoms, 8 to 22 carbon atoms, 8 to 18 carbon atoms, or 8 to 14 carbon atoms, and this alkene or alkyne may be linear or branched.

The alkane, alkene, or alkyne halogen may be optionally substituted with a substituent other than the thiol group, if necessary, and in this case, the substituent may be exemplified by an alkoxy group with 1 to 4 carbon atoms and/or a silyl group (for example, a substituent represented by $-Si(R_3)_3$ of Formula 9 above), and the like, but is not limited thereto.

The lower limit of the molecular weight (molar mass) of the thiol compound may be 50 g/mol, 100 g/mol, 150 g/mol, or 200 g/mol or so, and the upper limit thereof may be 400 g/mol, 350 g/mol, 300 g/mol, or 250 g/mol or so. The molecular weight may also be more than or equal to any one of the above-described lower limits, less than or equal to any one of the above-described upper limits, or within a range between any one of the above-described lower limits and any one of the above-described upper limits.

The specific type of such a thiol compound is not particularly limited, which may be, for example, 1-dodecane thiol or (3-mercaptopropyl)triethoxy silane), and the like.

When a thiol compound is included, the ratio may be adjusted depending on the purpose. For example, the lower limit of the ratio of the thiol compound relative to the total weight of 100 parts by weight of the curable component or the reactive compounds present in the curable component may be 0.001 parts by weight, 0.005 parts by weight, 0.01 parts by weight, 0.05 parts by weight, 0.1 parts by weight, 0.5 parts by weight, 1 part by weight, or 1.5 parts by weight or so, and the upper limit thereof may also be 10 parts by weight, 9 parts by weight, 8 parts by weight, 7 parts by weight, 6 parts by weight, 5 parts by weight, 4 parts by weight, 3 parts by weight, 2 parts by weight, 1 part by weight, 0.9 parts by weight, 0.8 parts by weight, 0.7 parts by weight, 0.6 parts by weight, 0.5 parts by weight, 0.4 parts by weight, 0.3 parts by weight, or 0.2 parts by weight or so. The ratio may also be more than or equal to any one of the above-described lower limits, less than or equal to any one of the above-described upper limits, or within a range between any one of the above-described lower limits and any one of the above-described upper limits. The above ratio may be changed considering the composition of the entire resin composition or the intended use.

When the thiol compound and the catalyst are included simultaneously in the polyurethane composition, their ratios may be controlled.

For example, the lower limit of the weight ratio (T/U) of the thiol compound (T) to the urethane reaction catalyst (U) may be 0.1, 0.5, 1, 1.5, 2, 2.5, or 3, and the upper limit thereof may be 6, 5.5, 5, 4.5, 4, or 3.5 or so. The ratio (T/U) may also be more than or equal to any one of the above-described lower limits, less than or equal to any one of the above-described upper limits, or within a range between any one of the above-described lower limits and any one of the above-described upper limits.

Here, the carboxylic acid compound may be, for example, a monofunctional compound having a hydrocarbon group. The matter that the carboxylic acid compound is a monofunctional compound means that the compound contains one carboxyl group (-COOH).

In one example, the carboxylic acid compound may be, for example, a carboxylic acid compound in which the hydrocarbon group is a saturated hydrocarbon group. Such a carboxylic acid compound may be, for example, a non-aromatic carboxylic acid compound. Such a carboxylic acid compound may be, for example, a compound in which the carbonyl group of the carboxylic acid compound is not conjugated with a $\pi$ electron system.

The hydrocarbon group of the carboxylic acid compound may be an alkyl group, alkenyl group, or alkynyl group. At this time, the alkyl group may be an alkyl group with 1 to 30 carbon atoms, 1 to 26 carbon atoms, 1 to 22 carbon atoms, 1 to 18 carbon atoms, 1 to 14 carbon atoms, 1 to 10 carbon atoms, 1 to 6 carbon atoms, 1 to 4 carbon atoms, 4 to 30 carbon atoms, 5 to 30 carbon atoms, 5 to 26 carbon atoms, 5 to 22 carbon atoms, 5 to 18 carbon atoms, 5 to 14 carbon atoms, or 5 to 10 carbon atoms, and this alkyl group may be linear or branched. The alkenyl group or alkynyl group may be an alkenyl group or alkynyl group with 2 to 30 carbon atoms, 4 to 30 carbon atoms, 5 to 30 carbon atoms, 5 to 26 carbon atoms, 5 to 22 carbon atoms, 5 to 18 carbon atoms, 5 to 14 carbon atoms, or 5 to 10 carbon atoms, and this alkenyl group or alkynyl group may be linear or branched.

The carboxylic acid compound may be a compound in which one of hydrogen atoms of a hydrocarbon compound

such as an alkane, alkene, or alkyne is substituted with a carboxyl group (-COOH). In this case, the alkane may be an alkane with 1 to 30 carbon atoms, 1 to 26 carbon atoms, 1 to 22 carbon atoms, 1 to 18 carbon atoms, 1 to 14 carbon atoms, 1 to 10 carbon atoms, 1 to 6 carbon atoms, 1 to 4 carbon atoms, 4 to 30 carbon atoms, 5 to 30 carbon atoms, 5 to 26 carbon atoms, 5 to 22 carbon atoms, 5 to 18 carbon atoms, 5 to 14 carbon atoms, or 5 to 10 carbon atoms, and this alkane may be linear or branched. The alkene or alkyne may be an alkene or alkyne with 2 to 30 carbon atoms, 4 to 30 carbon atoms, 5 to 30 carbon atoms, 5 to 26 carbon atoms, 5 to 22 carbon atoms, 5 to 18 carbon atoms, 5 to 14 carbon atoms, or 5 to 10 carbon atoms, and this alkene or alkyne may be linear or branched.

The lower limit of the molecular weight (molar mass) of the carboxylic acid compound may be 50 g/mol, 70 g/mol, 90 g/mol, 110 g/mol, 130 g/mol, or 140 g/mol or so, and the upper limit thereof may be 400 g/mol, 350 g/mol, 300 g/mol, 250 g/mol, 200 g/mol, 150 g/mol, or 100 g/mol or so. The molecular weight may also be more than or equal to any one of the above-described lower limits, less than or equal to any one of the above-described upper limits, or within a range between any one of the above-described lower limits and any one of the above-described upper limits.

As the carboxylic acid compound, a compound having a pKa within a predetermined range may be applied. The lower limit of the pKa of the compound may be 2, 2.5, 3, 3.5, 4, or 4.5 or so, and the upper limit thereof may be 9, 8.5, 8, 7.5, 7, 6.5, 6, 5.5, or 5 or so. The pKa may also be more than or equal to any one of the above-described lower limits, less than or equal to any one of the above-described upper limits, or within a range between any one of the above-described lower limits and any one of the above-described upper limits. The pKa may be changed considering the composition of the entire resin composition or the intended use.

The specific type of the carboxylic acid compound is not particularly limited, and for example, it may be acetic acid, stearic acid, 2-ethylhexanoic acid, isononanoic acid, or oleic acid, and the like.

When the carboxylic acid compound is included, the ratio may be adjusted depending on the purpose. For example, the lower limit of the ratio of the carboxylic acid compound relative to 100 parts by weight of the total weight of the curable component or the reactive compounds present in the curable component may be 0.001 parts by weight, 0.005 parts by weight, 0.01 parts by weight, 0.05 parts by weight, 0.1 parts by weight, 0.5 parts by weight, or 1 part by weight or so, and the upper limit thereof may also be 10 parts by weight, 9 parts by weight, 8 parts by weight, 7 parts by weight, 6 parts by weight, 5 parts by weight, 4 parts by weight, 3 parts by weight, 2 parts by weight, 1 part by weight, 0.9 parts by weight, 0.8 parts by weight, 0.7 parts by weight, 0.6 parts by weight, 0.5 parts by weight, 0.4 parts by weight, 0.3 parts by weight, or 0.2 parts by weight or so. The ratio may also be more than or equal to any one of the above-described lower limits, less than or equal to any one of the above-described upper limits, or within a range between any one of the above-described lower limits and any one of the above-described upper limits. The above ratio may be changed considering the composition of the entire resin composition or the intended use.

When the carboxylic acid compound and the catalyst are included simultaneously in the polyurethane composition, their ratios may be controlled.

For example, the lower limit of the weight ratio (C/U) of the carboxylic acid compound (C) to the urethane reaction catalyst (U) may be 0.1, 0.5, 1, 1.5, or 2, and the upper limit thereof may be 6, 5.5, 5, 4.5, 4, 3.5, 3, 3.5, 2, 2.5, or 1 or so. The ratio (C/U) may be more than or equal to any one of the above-described lower limits, less than or equal to any one of the above-described upper limits, or within a range between any one of the above-described lower limits and any one of the above-described upper limits.

As described above, any one of the thiol compound and carboxylic acid compound, or both may be applied as the curing rate regulator. In order that a desired viscosity maintenance section is secured after the curing initiation, appropriate curing speed and curability are secured after the viscosity maintenance section, and it is possible to control a hardness increase rate simultaneously, the carboxylic acid compound and the thiol compound may be applied simultaneously.

When the thiol compound and the carboxylic acid compound are simultaneously included as described above, the weight ratio (T/C) of the thiol compound (T) to the carboxylic acid compound (C) may be adjusted. The lower limit of the ratio (T/C) may be 0.01, 0.05, 0.1, 0.5, 1, 1.5, 2, 2.5, or 3 or so, and the upper limit thereof may be 10, 9.5, 9, 8.5, 8, 7.5, 7, 6.5, 6, 5.5, 5, 4.5, 4, 3.5, 3, 2.5, 2, or 1.5 or so. The ratio (T/C) may also be more than or equal to any one of the above-described lower limits, less than or equal to any one of the above-described upper limits, or within a range between any one of the above-described lower limits and any one of the above-described upper limits.

The resin composition may comprise the above components, and may further comprise other components if necessary. In this instance, an example of the applied other ingredients includes a viscosity modifier (e.g., thixotropy imparting agent, diluent, etc.) for increasing or decreasing the viscosity, or for adjusting the viscosity according to shear force, a dispersing agent, a surface treatment agent, a flame retardant, a flame-retardant adjuvant and/or a coupling agent, and the like, but is not limited thereto.

As described above, the resin composition may be the one-component composition or the two-component composition.

In the case of the two-component composition, the above-described respective components of the resin composition may be separately included in the main part and the curing agent part which are physically separated.

In one example, the present application relates to a composition (two-component composition) in which the resin

composition is composed of a two-component composition.

Such a two-component composition may comprise at least a main part and a curing agent part, where the main and curing agent parts may be physically separated from each other. When the main and curing agent parts thus physically separated are mixed, a curing reaction may be initiated. When the resin composition is a polyurethane composition, polyurethane may be formed due to a result of the curing reaction.

In constructing a two-component composition, the main part may comprise at least the curable component, catalyst, and curing rate regulator among the above-described components. Also, the curing agent part may comprise at least the curing agent (polyisocyanate). In such a case, the main part may not comprise the curing agent (polyisocyanate), and the curing agent part may not comprise the curable component, catalyst, and curing rate regulator.

The filler component may be included in any one of the main and curing agent parts, or may be included in both the main and curing agent parts. When the filler component is included in both the main and curing agent parts, the same amount of the filler component may be included in the main and curing agent parts.

For example, in such a case, the upper limit of the ratio of the filler component in the main part may be 95 weight%, 94.5 weight%, 94 weight%, 93.5 weight%, 93 weight%, 92.5 weight%, 92 weight%, 91.5 weight%, 91 weight%, 90.5 weight%, 90.0 weight%, 89.5 weight%, or 89.0 weight% or so, and the lower limit thereof may be 70 weight%, 71 weight%, 72 weight%, 73 weight%, 74 weight%, about 75 weight%, 76 weight%, 77 weight%, 78 weight%, 79 weight%, 80 weight%, 81 weight%, 82 weight%, 83 weight%, 84 weight%, 85 weight%, 86 weight%, 87 weight%, or 88 weight% or so. The ratio may also be more than or equal to any one of the above-described lower limits, less than or equal to any one of the above-described upper limits, or within a range between any one of the above-described lower limits and any one of the above-described upper limits.

The ratio of the filler component in the main part may be defined as a ratio relative to 100 parts by weight of the total weight of the curable component of the main part or the reactive compounds present in the curable component. For example, the lower limit of the ratio of the filler component may be 500 parts by weight, 550 parts by weight, 600 parts by weight, 650 parts by weight, 700 parts by weight, 750 parts by weight, 800 parts by weight, or 850 parts by weight or so, and the upper limit thereof may be 2,000 parts by weight, 1,800 parts by weight, 1,600 parts by weight, 1,400 parts by weight, 1,200 parts by weight, 1,000 parts by weight, 950 parts by weight, or 900 parts by weight or so. The ratio may be more than or equal to any one of the above-described lower limits, less than or equal to any one of the above-described upper limits, or within a range between any one of the above-described lower limits and any one of the above-described upper limits.

Meanwhile, in such a case, the upper limit of the ratio of the filler component in the curing agent part may be 95 weight%, 94.5 weight%, 94 weight%, 93.5 weight%, 93 weight%, 92.5 weight%, 92 weight%, 91.5 weight%, 91 weight%, 90.5 weight%, 90.0 weight%, 89.5 weight%, or 89.0 weight% or so, and the lower limit thereof may be 70 weight%, 71 weight%, 72 weight%, 73 weight%, 74 weight%, about 75 weight%, 76 weight%, 77 weight%, 78 weight%, 79 weight%, 80 weight%, 81 weight%, 82 weight%, 83 weight%, 84 weight%, 85 weight%, 86 weight%, 87 weight%, or 88 weight% or so. The ratio may also be more than or equal to any one of the above-described lower limits, less than or equal to any one of the above-described upper limits, or within a range between any one of the above-described lower limits and any one of the above-described upper limits.

The ratio of the filler component in the curing agent part may also be defined as a ratio relative to 100 parts by weight of the curing agent (polyisocyanate) in the curing agent part. For example, the lower limit of the ratio of the filler component may be 500 parts by weight, 550 parts by weight, 600 parts by weight, 650 parts by weight, 700 parts by weight, 750 parts by weight, 800 parts by weight, or 850 parts by weight or so, and the upper limit thereof may be 2,000 parts by weight, 1,800 parts by weight, 1,600 parts by weight, 1,400 parts by weight, 1,200 parts by weight, 1,000 parts by weight, 950 parts by weight, or 900 parts by weight or so. The ratio may also be more than or equal to any one of the above-described lower limits, less than or equal to any one of the above-described upper limits, or within a range between any one of the above-described lower limits and any one of the above-described upper limits.

The catalyst, plasticizer, flame retardants, and the like as other components may be included in the main and/or curing agent part as needed.

In the two-component composition, the lower limit of the volume ratio (P/N) of the volume (P) of the main part to the volume (N) of the curing agent part may be 0.8, 0.85, 0.9, 0.95, or 1 or so, and the upper limit thereof may be 1.2, 1.15, 1.1, 1.05, or 1. The ratio (P/N) may also be more than or equal to any one of the above-described lower limits, less than or equal to any one of the above-described upper limits, or within a range between any one of the above-described lower limits and any one of the above-described upper limits.

In one example, the two-component composition may be formulated so that the above-described equivalent ratio (OH/NCO) may be secured when the main part and the curing agent part have the above volume ratio.

Such a two-component composition or the cured body thereof may also exhibit the adhesion force to aluminum and polyester, thermal conductivity, hardness, curvature radius, insulation, flame retardancy, specific gravity, shrinkage, coefficient of thermal expansion and/or 5% weight loss temperature in a thermogravimetric analysis (TGA), and the like.

The resin composition (one-component or two-component composition) can exhibit an appropriate curing rate after the curing initiation. Here, the curing initiation occurs when the curing component and the curing agent contained in

the resin composition come into contact under conditions where the curing can be initiated. Therefore, in the case of the one-component composition, the curing may be initiated when the relevant composition is placed under curing initiation conditions, and in the case of the two-component composition, the curing may be initiated when the main and curing agent parts are mixed under curing initiation conditions.

For example, when the resin composition is a curable composition, the curable composition may exhibit a curing rate such that $V_1$ according to Equation 1 below is within a predetermined range.

[Equation 1]

$$V_1 = V_{initial}/t$$

In Equation 1, $V_{initial}$ is the initial viscosity (unit: cps) of the curable composition at the curing initiation point, and t is the time (unit: minute) required for the viscosity of the curable composition to double compared to the initial viscosity from the curing initiation point.

As described above, the curing occurs when the components participating in the curing reaction come into contact under conditions enabling curing.

For example, when the curable composition is a main part comprising the curable component, curing rate regulator; the urethane reaction catalyst and filler component, the curing initiation point is a time point when the main part (curable composition) and the curing agent component (e.g., the curing agent component or curing agent part containing the polyisocyanate) are mixed under conditions enabling curing. The mixing for confirming Equation 1 above may be performed so that the main part and the curing agent component satisfy the above-described volume ratio (P/N) and/or equivalent ratio (OH/NCO).

Therefore, in such a case, the initial viscosity may be the initial viscosity of the mixture of the main part and the curing agent component.

A method of confirming $V_1$ in Equation 1 above is summarized in Examples.

The lower limit of $V_1$ in Equation 1 above may be 2,000 cps/min, 2,500 cps/min, 3,000 cps/min, 3,500 cps/min, 4,000 cps/min, 4,500 cps/min, 5,000 cps/min, 5,500 cps/min, 6,000 cps/min, or 6,500 cps/min or so, and the upper limit thereof may be 20,000 cps/min, 18,000 cps/min, 16,000 cps/min, 14,000 cps/min, 12,000 cps/min, 10,000 cps/min, 9,500 cps/min, 9,000 cps/min, 8,500 cps/min, 8,000 cps/min, 7,500 cps/min, 7,000 cps/min, 6,500 cps/min, 6,000 cps/min, 5,500 cps/min, 5,000 cps/min, 4,500 cps/min, 4,000 cps/min, 3,500 cps/min, 3,000 cps/min, or 2,500 cps/min or so. The $V_1$ may also be more than or equal to any one of the above-described lower limits, less than or equal to any one of the above-described upper limits, or within a range between any one of the above-described lower limits and any one of the above-described upper limits.

In Equation 1 above, the upper limit of $V_{initial}$ may be 400,000 cps, 350,000 cps, 300,000 cps, 250,000 cps, 200,000 cps, or 150,000 cps or so, and the lower limit thereof may be 10,000 cps, 50,000 cps, 100,000 cps, 150,000 cps, or 200,000 cps or so. The $V_{initial}$ may also be more than or equal to any one of the above-described lower limits, less than or equal to any one of the above-described upper limits, or within a range between any one of the above-described lower limits and any one of the above-described upper limits.

The curable composition may exhibit a predetermined Shore OO hardness detection time after the curing initiation point. Here, the Shore OO hardness detection time means the time taken for the Shore OO hardness to be first detected in a process of periodically measuring the hardness of the curable composition after the curing initiation point. That is, when the curable composition is placed in the curing initiation condition, the hardness increases while the curing proceeds, so that if the Shore OO hardness detection time is short, it means that the curing rate is fast.

Here, the meaning of the curing initiation point, or the curable composition in which the hardness is measured is as described in Equation 1 above.

Thus, for example, when the curable composition is a main part comprising the curable component, curing rate regulator; the urethane reaction catalyst and filler component, the curing initiation point is a time point when the main part (curable composition) and the curing agent component (e.g., the curing agent component or curing agent part containing the polyisocyanate) are mixed under conditions enabling curing, and the mixing for confirming Equation 1 above may be performed so that the main part and the curing agent component satisfy the above-described volume ratio (P/N) and/or equivalent ratio (OH/NCO).

In such a case the hardness may be measured for a mixture of the main part and the curing agent component.

The lower limit of the Shore OO hardness detection time may be 60 minutes, 80 minutes, 100 minutes, 150 minutes, 200 minutes, 250 minutes, 300 minutes, 350 minutes, 400 minutes, 450 minutes, 500 minutes, 550 minutes, 600 minutes, 650 minutes, 700 minutes, or 750 minutes or so, and the upper limit thereof may be 30 hours, 28 hours, 26 hours, 24 hours, 22 hours, 20 hours, 18 hours, 16 hours, 14 hours, 12 hours, 10 hours, 9 hours, 8 hours, 7 hours, 6 hours, 5 hours, or 4 hours or so. The detection time may also be more than or equal to any one of the above-described lower limits, less

than or equal to any one of the above-described upper limits, or within a range between any one of the above-described lower limits and any one of the above-described upper limits.

The present application also relates to a thermal interface material (TIM). The thermal interface material may be a cured body of the resin composition.

Therefore, the thermal interface material may also exhibit the adhesion force to aluminum and polyester, the thermal conductivity, the hardness, the curvature radius, the insulation properties, the flame retardancy, the specific gravity, the shrinkage rate, the thermal expansion coefficient and/or the 5% weight loss temperature in the thermogravimetric analysis (TGA), and the like, as described above.

Therefore, the thermal interface material may comprise components contained in the resin composition, or components derived from the components.

For example, if the resin composition is a polyurethane composition, the thermal interface material may comprise the polyurethane.

The polyurethane may be formed by reaction of the above-described reactive compounds with the curing agent (polyisocyanate).

Therefore, the polyurethane may contain units derived from the reactive compounds.

For example, if the reactive compound contains the polyester skeleton (e.g., polycaprolactone skeleton) or the polyether skeleton (e.g., polyalkylene skeleton) as described above, the polyurethane may contain the polyester unit (e.g., polycaprolactone unit) or the polyether unit (e.g., polyalkylene unit).

For example, the polyurethane may contain units of Formulas 2, 3, 5, and/or 6 as described above.

Also, the polyurethane may contain the hydrocarbon group derived from the above-described oil-modified compound, that is, the linear or branched hydrocarbon group with 3 or more carbon atoms.

As described above, the lower limit of the number of carbon atoms in the linear or branched hydrocarbon group may be 4, 5, 6, 7, 8, 9, 10, 11, 12, 13, 14, 15, 16, or 17 or so, and the upper limit thereof may also be 50, 49, 48, 47, 46, 45, 44, 43, 42, 41, 40, 39, 38, 37, 36, 35, 34, 33, 32, 31, 30, 29, 28, 27, 26, 25, 24, 23, 22, 21, 20, 19, 18, 17, 16, 15, 14, 13, 12, 11, 10, 9, or 8 or so. The number of carbon atoms may be less than or equal to any one of the above-described upper limits, more than or equal to any one of the above-described lower limits, or within a range between any one of the above-described lower limits and any one of the above-described upper limits.

The linear or branched hydrocarbon group may or may not contain double bonds. In the case of including the double bonds, such double bonds may be conjugated double bonds or cis double bonds.

A specific type of the hydrocarbon group may be exemplified by an alkyl group, an alkenyl group, or an alkynyl group. In one example, the hydrocarbon group may be linked to the polyurethane skeleton via a carbonyl group or a carbonyloxy group, and in this case, the hydrocarbon group may be an alkylcarbonyl group, an alkenylcarbonyl group, an alkynylcarbonyl group, an alkylcarbonyloxy group, an alkenylcarbonyloxy group, or an alkynylcarbonyloxy group. Here, the number of carbon atoms in the alkyl group, alkenyl group or alkynyl group may also be more than or equal to any one of the lower limits of the number of carbon atoms of the linear or branched hydrocarbon group as described above, less than or equal to any one of the upper limits of the number of carbon atoms of the linear or branched hydrocarbon group as described above, or within a range between any one of the lower limits of the number of carbon atoms of the linear or branched hydrocarbon group as described above and any one of the upper limits of the number of carbon atoms of the linear or branched hydrocarbon group as described above.

The alkyl group, alkenyl group, or alkynyl group may be linear or branched, and may be optionally substituted with one or more substituents. When the substituent is present, the type of the substituent is not particularly limited, and for example, a halogen atom such as fluorine may be exemplified as the substituent.

As described above, the hydrocarbon group may be included in the structures of Formulas 1 to 6 as described above.

In addition, the polyurethane may contain units derived from the above-described curable component, so that it may contain the unit of the first reactive compound and the unit of the second reactive compound, and may contain, as the unit of the second reactive compound, the unit of the third reactive compound and the unit of the fourth reactive compound.

The specific description of the reactive compounds and the ratios therebetween can be applied in the same way as those described in the resin composition.

In addition, the polyurethane may contain units derived from the above-described curing agent, so that it may contain the above-described polyisocyanate units, for example, the polyisocyanate unit with trifunctionality or more, and the polyisocyanate unit with bifunctionality. The specific description of the polyisocyanate and the ratios therebetween can be applied in the same way as those described in the resin composition.

The polyurethane included in the thermal interface material may contain at least one hydroxy group. That is, the polyurethane can be synthesized by forming a urethane bond by reacting the hydroxy group of the reactive compound with the isocyanate group of the polyisocyanate, which is the curing agent, where at least one hydroxy group may remain in the final polyurethane by adjusting the hydroxy group equivalent of the reactive compound to be larger in this process. For example, the polyurethane may contain the hydroxy group in an amount of 0.1 mol/g or more, 0.1 mol/g to 10 mol/g, 0.1

mol/g to 9 mol/g, 0.1 mol/g to 8 mol/g, 0.1 mol/g. to 7 mol/g, 0.1 mol/g to 6 mol/g, 0.1 mol/g to 5 mol/g, 0.1 mol/g to 4 mol/g, 0.1 mol/g to 3 mol/g, 0.1 mol/g to 2 mol/g, 0.1 mol/g to 1 mol/g, and 0.1 mol/g to 0.5 mol/g or so. By allowing the hydroxy group to remain in the polyurethane at such a ratio, it is possible to form the thermal interface material having the desired properties more effectively. The method of allowing the hydroxy group to remain in the polyurethane as above is not particularly limited, and by adjusting the equivalent ratio of OH/NCO during the reaction process, it is possible to form this polyurethane.

The thermal interface material may comprise the components of the resin composition as described above, such as the curing rate regulator, the plasticizer, the catalyst, and/or the filler component, together with the polyurethane, and specific descriptions of the components, and their weight ratios may be applied in the same manner as in the above resin composition.

The present application also relates to a product comprising the resin composition or the cured body thereof (thermal interface material or heat transfer material). The resin composition of the present application or the cured body thereof may be usefully applied as a heat dissipation material. Therefore, the product may comprise a heat-generating component. The term heat-generating component means a component that emits heat during use, and the type is not particularly limited. The representative heat-generating component includes various electric/electronic products comprising battery cells, battery modules, or battery packs, and the like.

The product of the present application may comprise, for example, the heat-generating component and the resin composition (or the two-component composition) or the cured body thereof existing adjacent to the heat-generating component.

A specific method of configuring the product of the present application is not particularly limited, and if the resin composition or the two-component composition of the present application, or the cured body thereof is applied as a heat dissipation material, the product may be configured in various known ways.

## Advantageous Effects

The present application provides a curable composition, a thermal interface material (TIM), and a use thereof. In the present application, the curable composition or thermal interface material, and the like can exhibit low adhesion force to a given adherend while exhibiting high thermal conductivity. Also, in the present application, the low adhesion force can be achieved without using an adhesion force adjusting component such as a plasticizer or in a state where the use ratio thereof is minimized.

In the present application, the curable composition can also exhibit a precisely controlled curing rate and simultaneously have excellent curability.

The present application can also provide a product comprising the curable composition, or a cured body or thermal interface material thereof.

## Description of Drawings

Figure 1 is a diagram of an equipment measuring load values.

Figures 2 and 3 show analysis results of reactive compounds synthesized in Preparation Examples 1 and 2, respectively.

Figures 4 and 5 are graphs recording changes in viscosity and hardness over time, respectively.

## Mode for Invention

Hereinafter, the present application will be specifically described through Examples, but the scope of the present application is not limited by the following examples.

The cured body mentioned below is formed by mixing the main part and curing agent part of resin compositions in Examples, which are prepared in a two-component type, so that the OH/NCO equivalent ratio described in each example is satisfied, and then maintaining the mixture at room temperature (25°C) for about 24 hours.

In the present examples, the physical properties were evaluated in the following manners.

### 1. Thermal conductivity

The thermal conductivity of the resin composition (curable composition) or the cured body thereof was measured

by a hot-disk method according to ISO 22007-2 standard. Specifically, mixtures in which the main parts and the curing agent parts were mixed in a volume ratio of 1:1 in Examples or Comparative Examples were each placed in a mold having a thickness of about 7 mm or so, and cured, and the thermal conductivity was measured in the through plane direction using the Hot Disk equipment. As stipulated in the above standard (ISO 22007-2), the Hot Disk equipment is an equipment that can check the thermal conductivity by measuring the temperature change (electrical resistance change) while the sensor with the nickel wire double spiral structure is heated, and the thermal conductivity was measured according to this standard.

### 2. Measurement of adhesion force to polyester

The adhesion force to polyester was evaluated for a specimen prepared by attaching a PET (polyethylene terephthalate) film and an aluminum plate. A film having a width of 10 mm or so and a length of 200 mm or so was used as the PET film, and an aluminum plate having each of a width and a length of 100 mm was used as the aluminum plate. A resin composition was applied to the entire surface of the aluminum plate and maintained at room temperature (about 25°C) for about 24 hours in a state where the PET film was attached on the resin composition to prepare a specimen. At this time, the entire width and 100 mm or so of the length portion in the PET film were attached to the aluminum plate via the resin composition. The adhesion force was measured while the PET film was peeled from the aluminum plate in the longitudinal direction in a state where the aluminum plate of the specimen was fixed. The attachment was performed by applying the resin composition (the mixture of the main part and the curing agent part in a volume ratio of 1:1) to the aluminum plate to have a thickness of about 2 mm or so after curing, and then closely attaching the PET film on the layer of the resin composition, and maintaining them at room temperature (about 25°C) for about 24 hours to cure the resin composition. The peeling was performed at a peel rate of about 0.5 mm/min or so and a peel angle of 180 degrees until the PET film was completely peeled off.

### 3. Measurement of adhesion force to aluminum

An uncured resin composition (a mixture of a main part and a curing agent part in a volume ratio of 1:1) was coated in the center of an aluminum substrate having horizontal and vertical lengths of 2 cm and 7 cm, respectively, to have a width of 2 cm and a length of 2 cm or so, and an aluminum substrate having horizontal and vertical lengths of 2 cm and 7 cm, respectively, was attached again on the coating layer, and the resin composition was cured by maintaining the state. Here, the two aluminum substrates were attached to form an angle of 90 degrees to each other. Hereinafter, with the upper aluminum substrate fixed, the lower aluminum substrate was pressed at a speed of 0.5 mm/min to measure the force while the lower aluminum substrate was separated, and the adhesion force to aluminum was obtained by dividing the maximum force measured in the process by the area of the specimen.

### 4. Hardness measurement

The hardness of the cured body of the resin composition was measured according to ASTM D 2240 and JIS K 6253 standards. It was performed using ASKER's durometer hardness device, where the initial hardness was measured by applying a load of 1 Kg or more (about 1.5 Kg) to the surface of the sample (cured body) in a flat state, and after 15 seconds, the hardness was evaluated by confirming the stabilized measurement value.

### 5. Measurement of viscosity

The viscosity was measured using a Brookfield HB DB3T type device under a condition of a shear rate of $0.01s^{-1}$ to $10.0s^{-1}$ at room temperature (about 25°C). The viscosity mentioned in this specification is a viscosity at the point of a shear rate of 2.4s-1, unless otherwise specified.

### 6. Measurement of curing rate (hardness confirmation time)

The curing rate of the resin composition was evaluated through the change in hardness over time. At this time, the hardness was measured according to ASTM D 2240 and JIS K 6253 standards in the same manner as described above. The main part and the curing agent part were mixed at a volume ratio of 1:1, and the hardness was identified every 30 minutes while maintaining the mixture at room temperature (about 25°C), and the curing rate was evaluated by confirming the time when the Shore OO hardness was first identified.

**7. Measurement of curing rate (viscosity increase time)**

The curing rate of the resin composition was also evaluated through the change in viscosity over time.

Specifically, the curing rate was evaluated by confirming $V_1$ in Equation 1 below.

[Equation 1]

$$V_1 = V_{initial}/t$$

In Equation 1, $V_{initial}$ is the initial viscosity (unit: cps) of a mixture in which the curable composition is mixed with the curing agent component having polyisocyanate, and t is the time (unit: minutes) required for the viscosity of the mixture to double compared to the initial viscosity.

Specifically, the $V_{initial}$ is a value obtained by loading a mixture, in which a main part and a curing agent part prepared in each of Examples or Comparative Examples are mixed at a volume ratio of 1:1, into a viscosity measuring device (Brookfield HB DB3T type device), maintaining it for approximately 60 seconds in a state where a shear rate of $2.4s^{-1}$ is maintained to stabilize the viscosity, and then measuring it.

The viscosity was measured over time while loading it into a Brookfield HB DB3T type viscometer and maintaining the condition of a shear rate of $2.4^{s-1}$.

**8. Measurement of curvature radius**

The curvature radius of the cured body was evaluated using a cured body having a width, a length, and a thickness of 1cm, 10cm, and 2mm, respectively. When the cured body is attached to cylinders having various radii and bent along the longitudinal direction, the curvature radius is the minimum radius of the cylinder at which cracks do not occur in the cured body.

**9. Measurement of average particle diameter**

The average particle diameter of the filler is the D50 particle diameter of the filler, which is the particle diameter measured by Marvern's MASTERSIZER3000 equipment in accordance with ISO-13320 standard. Upon measurement, ethanol was used as a solvent. The incident laser is scattered by the fillers dispersed in the solvent, and the values of the intensity and directionality of the scattered laser vary depending on the size of the filler, which are analyzed using the Mie theory, whereby the D50 particle diameter can be obtained. Through the above analysis, the distribution can be obtained through conversion to the diameter of a sphere having the same volume as the dispersed fillers, and the particle diameter can be evaluated by obtaining the D50 value, which is the median value of the distribution.

**10. Module workability evaluation**

The resin composition (mixture of main and curing agent parts in a volume ratio of 1:1) was applied to an aluminum plate in a square shape with a width and a length of 8 cm, respectively, and a thickness of about 2 mm or so, and maintained under conditions of room temperature (about 25°C) and normal humidity (about 40% relative humidity) for 24 hours or so to be cured. Subsequently, while the cured product was peeled off from the aluminum plate, the module workability was evaluated according to the following criteria.

<Evaluation criteria>

O: When the cured product of the resin composition is peeled off in a sheet shape without leaving any residue on the aluminum plate

X: When it is impossible to peel off the cured product of the resin composition from the aluminum plate, or even if it is peeled off, residues remain

**11. Purging waiting time evaluation**

The purging waiting time was evaluated by measuring a load value.

The load value (unit: kgf) was evaluated using the equipment as disclosed in Figure 1. The equipment of Figure 1 is an equipment (1) in which two cartridges (2, 2a, 2b) and one static mixer (5) are connected. In the equipment (1), as the cartridge (2, 2a, 2b), a cartridge (Sulzer, AB050-01-10-01) having a circular material injection portion with a diameter of 18 mm, a circular material discharge portion (4, 4a, 4b) with a diameter of 3 mm, a height of 100 mm, and an internal volume of 25 ml was used. As the static mixer (5), a stepped static mixer (Sulzer, MBH-06-16T) having a circular discharge portion (7) with a diameter of 2 mm, and 16 elements was used. As a pressurizing means (3, 3a, 3b) of the equipment (means for pushing the composition loaded on the cartridge), a TA (Texture analyzer) was used.

To measure the load value, the main part was loaded into any one of the two cartridges (2a, 2b), and the curing agent part was loaded into the other cartridge. Subsequently, by pressurizing them at a constant speed of 1 mm/sec with the pressurizing means (3, 3a, 3b), the main agent and the curing agent part were injected into the static mixer (5), and mixed in the mixer (5), thereby making to be discharged from the discharge portion (7). In the above process, the force applied to the pressurizing means was measured from the time of starting the pressurization with the pressurizing means to the discharge time. In the above process, the maximum value of the force applied to the pressurizing means was designated as the load value.

After measuring the load value, the pressurization was stopped, and the equipment (1) was maintained at room temperature (about 25°C). In this case, the mixture of the main part and the curing agent parts is maintained in the mixer (5). After waiting for a certain period, the pressurization was started again using the pressurizing means, and the load value was measured in the same manner as above. In this process, the waiting time when the load value reached 60 kgf was designated as the purging waiting time.

### 12. Measurement of weight average molecular weight

The weight average molecular weight (Mw) was measured using GPC (Gel permeation chromatography). Specifically, the weight average molecular weight (Mw) can be measured by adding a sample to be analyzed into a 5 mL vial, diluting it with a THF (tetrahydrofuran) solvent to a concentration of about 1 mg/mL, and then filtering a standard sample for calibration and the analysis sample through a syringe filter (pore size: 0.45 μm). Agilent technologies' ChemStation is used as an analysis program, and the weight average molecular weight (Mw) can be obtained by comparing the elution time of the sample with the calibration curve.

<GPC measurement conditions>

Instrument: Agilent technologies' 1200 series

Column: using Agilent technologies' TL Mix. A& B

Solvent: THF (tetrahydrofuran)

Column temperature: 35°C

Sample concentration: 1 mg/mL, 200 μl injection

Standard sample: using polystyrene (MP: 3900000, 723000, 316500, 52200, 31400, 7200, 3940, 485)

### 13. GC-MS (Gas Chromatography-Mass Spectrometry) analysis

Agilent's instrument was used as a measuring instrument for GC-MS analysis (GC (Gas Chromatography) instrument: 7890 model, MS (Mass Spectrometry) detector: 5977B model). A sample (cured product of the resin composition) is dissolved in a solvent (chloroform) at a concentration of 100 mg/mL, and the supernatant is extracted to be filtered through a 0.2μm syringe filter, and then loaded into the GS-MS analysis instrument. The analysis is performed under the following conditions, and the quantitative analysis is performed through the intensities of the peaks of the detection target substances (1-dodecanethiol and 2-ethylhexanoic acid).

<GC measurement conditions>

Column: Agilent technologies' HP-5MS
Gas Flow Rate: Column (He): 1mL/min
Ionization mode: EI
Injector temperature: 300°C
Injection volume: 0.5 μl

**Preparation Example 1.**

An oil-modified compound (reactive compound) of Formula A below was prepared in the following manner.

[Formula A]

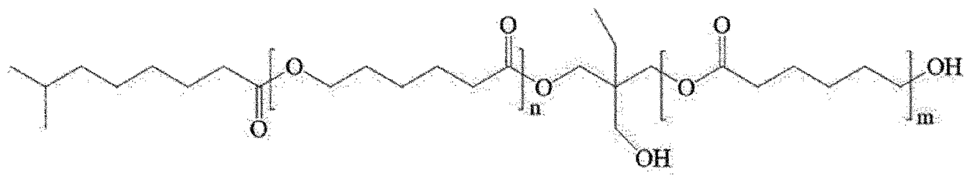

In Formula A, n and m are each more than 0, and the sum (n+m) is about 4.8.

Polycaprolactone polyol (Capa 3031, Perstorp) and isononanoic acid as a saturated fatty acid were mixed in a weight ratio of 1:0.53 (Capa 3031: isononanoic acid). Subsequently, a catalyst (tin(II) 2-ethylhexanoate (Sigma-Aldrich)) was added in an amount of 0.1 parts by weight relative to 100 parts by weight of the mixture, and the mixture was stirred at 150°C for 30 minutes under inert gas purge conditions, and simultaneously maintained. Subsequently, a small amount of xylene as an azeotropic solution was added, the temperature was raised to 200°C, and the reaction was performed for 3 hours or more, and then the pressure was reduced to 80 Torr or less, and xylene and unreacted products were removed. The reaction product was cooled and then filtered to obtain the target product (compound of Formula A).

As a result of the GPC analysis performed on the target product, the weight average molecular weight was about 710 g/mol. Figure 2 is a view showing the results of the GPC analysis performed on the target product.

**Preparation Example 2.**

An oil-modified compound (reactive compound) of Formula B below was prepared in the following manner.

[Formula B]

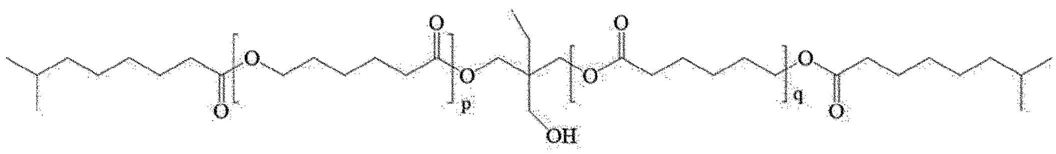

In Formula B, p and q are each more than 0, and the sum (p+q) is about 4.8.

Polycaprolactone polyol (Capa 3031, Perstorp) and isononanoic acid as a saturated fatty acid were mixed in a weight ratio of 1:1.06 (Capa 3031: isononanoic acid). Subsequently, a catalyst (tin(II) 2-ethylhexanoate (Sigma-Aldrich)) was added in an amount of 0.1 parts by weight relative to 100 parts by weight of the mixture, and the mixture was stirred at 150°C for 30 minutes under inert gas purge conditions, and simultaneously maintained. Subsequently, a small amount of xylene as an azeotropic solution was added, the temperature was raised to 200°C, and the reaction was performed for 3 hours or more, and then the pressure was reduced to 80 Torr or less, and xylene and unreacted products were removed. The reaction product was cooled and then filtered to obtain the target product (compound of Formula B).

As a result of the GPC analysis performed on the target product, the weight average molecular weight was about 814 g/mol. Figure 3 is a view showing the results of the GPC analysis performed on the target product.

**Example 1.**

**Preparation of main part**

Oil-modified compounds of Preparation Examples 1 and 2, a non-oil-modified compound (Kuraray, F-2010), a urethane reaction catalyst (DBTDL, dibutyltin dilaurate), a thiol compound (1-dodecanethiol), a carboxylic acid compound (2-EHA, 2-ethylhexanoic acid), a filler component, and a plasticizer (diisononyl adipate) were mixed in a weight ratio of 4.59:5.1:0.51:0.066:0.2:0.066:88.8:0.71 (Preparation Example 1: Preparation Example 2: F-2010: DBTDL: thiol: 2-EHA: filler: plasticizer) to prepare a main part. The filler component was prepared by mixing a first alumina filler with an average particle diameter of about 70 μm, a second alumina filler with an average particle diameter of about 20 μm, and a third alumina filler with an average particle diameter of about 1 μm. The volume ratio upon the mixing was about 6:2:2 (first alumina filler: second alumina filler: third alumina filler) or so.

**Preparation of curing agent part**

A polyisocyanate (Tolonate HDT-LV2, manufactured by Vencorex) was used as a curing agent. A main part was prepared by mixing the polyisocyanate, a filler component, and a plasticizer (diisononyl adipate) in a weight ratio of 5.08:4.78:90.1 (polyisocyanate: filler: plasticizer). The filler component was prepared by mixing a first alumina filler with an average particle diameter of about 70 μm, a second alumina filler with an average particle diameter of about 20 μm, and a third alumina filler with an average particle diameter of about 1 μm. The volume ratio upon the mixing was about 6:2:2 (first alumina filler: second alumina filler: third alumina filler) or so.

The curing agent part was prepared for an equivalent ratio (OH/NCO) of the hydroxy group (OH) present in the main part and the isocyanate group (NCO) present in the curing agent part to be about 100 when the curing agent part was formulated with the main part in a volume ratio of 1:1.

**Preparation of resin composition and cured body**

A resin composition (curable composition) was prepared by preparing the main and curing agent parts, respectively, and the main and curing agent parts were mixed in a volume ratio of about 1:1 and then maintained at room temperature (about 25° C.) to form a cured body.

**Example 2.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the carboxylic acid compound (2-EHA, 2-ethylhexanoic acid), the filler component, and the plasticizer (diisononyl adipate) was changed to 4.59:5.1:0.51:0.048:0.096:0.096:88.9:0.71 (Preparation Example 1: Preparation Example 2: F-2010: DBTDL: thiol: 2-EHA: filler: plasticizer). The curing agent part, resin composition, and cured body were prepared in the same manner as in Example 1.

**Example 3.**

A main part was prepared in the same manner as in Example 1, except that the formulation weight ratio of oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the carboxylic acid compound (2-EHA, 2-ethylhexanoic acid), the filler component, and the plasticizer (diisononyl adipate) was changed to 4.59:5.1:0.51:0.06:0.11:0.11:88.8:0.71 (Preparation Example 1: Preparation Example 2: F-2010: DBTDL: thiol: 2-EHA: filler: plasticizer). The curing agent part, resin composition, and cured body were prepared in the same manner as in Example 1.

**Example 4**

A main part was prepared by formulating oil-modified compounds of Preparation Examples 1 and 2, a non-oil-modified compound (Kuraray, F-2010), a urethane reaction catalyst (DBTDL, dibutyltin dilaurate), a thiol compound (1-dodecanethiol), a carboxylic acid compound (2-EHA, 2-ethylhexanoic acid), a filler component, and a plasticizer (diisononyl adipate) in a weight ratio of 4.59:5.1:0.51:0.03:0.055:0.055:89:0.71 (Preparation Example 1: Preparation Example 2: F-2010: DBTDL: thiol: 2-EHA: filler: plasticizer) As the filler component, the same component as in Example 1 was used.

The curing agent part, resin composition, and cured body were prepared in the same manner as in Example 1.

**Example 5**

A main part was prepared by formulating oil-modified compounds of Preparation Examples 1 and 2, a non-oil-modified compound (Kuraray, F-2010), a urethane reaction catalyst (DBTDL, dibutyltin dilaurate), a thiol compound (1-dodecanethiol), a carboxylic acid compound (2-EHA, 2-ethylhexanoic acid), a filler component, and a plasticizer (diisononyl adipate) in a weight ratio of 4.59:5.1:0.51:0.018:0.033:0.033:89:0.71 (Preparation Example 1: Preparation Example 2: F-2010: DBTDL: thiol: 2-EHA: filler: plasticizer). As the filler component, the same component as in Example 1 was used.

The curing agent part, resin composition, and cured body were prepared in the same manner as in Example 1.

**Example 6**

A main part was prepared by formulating oil-modified compounds of Preparation Examples 1 and 2, a non-oil-modified compound (Kuraray, F-2010), a urethane reaction catalyst (DBTDL, dibutyltin dilaurate), a thiol compound (1-dodecanethiol), a carboxylic acid compound (2-EHA, 2-ethylhexanoic acid), a filler component, and a plasticizer (diisononyl adipate) in a weight ratio of 4.59:5.11:0.51:0.012:0.022:0.022:89:0.71 (Preparation Example 1: Preparation Example 2: F-2010: DBTDL: thiol: 2-EHA: filler: plasticizer). As the filler component, the same component as in Example 1 was used.

The curing agent part, resin composition, and cured body were prepared in the same manner as in Example 1.

**Example 7**

A main part was prepared by formulating oil-modified compounds of Preparation Examples 1 and 2, a non-oil-modified compound (Kuraray, F-2010), a urethane reaction catalyst (DBTDL, Dibutyltin dilaurate), a thiol compound (1-dodecanethiol), a carboxylic acid compound (2-EHA, 2-ethylhexanoic acid), a filler component, and a plasticizer (diisononyl adipate) in a weight ratio of 4.6:5.11:0.51:0.0066:0.011:0.011:89:0.71 (Preparation Example 1: Preparation Example 2: F-2010: DBTDL: thiol: 2-EHA: filler: plasticizer). As the filler component, the same component as in Example 1 was used.

The curing agent part, resin composition, and cured body were prepared in the same manner as in Example 1.

**Comparative Example 1**

A main part, a curing agent part, a resin composition, and a cured body were prepared in the same manner as in Example 1, except that the thiol compound and the carboxylic acid compound were not used upon preparing the main part.

**Comparative Example 2.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the carboxylic acid compound (2-EHA, 2-ethylhexanoic acid), the filler component, and the plasticizer (diisononyl adipate) was changed to 4.59:5.10:0.51:0.066:0.13:88.9:0.71 (Preparation Example 1: Preparation Example 2: F-2010: DBTDL: 2-EHA: filler: plasticizer). The curing agent part, resin composition, and cured body were prepared in the same manner as in Example 1.

**Comparative Example 3.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the filler component, and the plasticizer (diisononyl adipate) was changed to 4.59:5.1:0.51:0.066:0.13:88.9:0.71 (Preparation Example 1: Preparation Example 2: F-2010: DBTDL: thiol: filler: plasticizer). The curing agent part, resin composition, and cured body were prepared in the same manner as in Example 1.

**Comparative Example 4.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the filler component, and the

plasticizer (diisononyl adipate) was changed to 4.59:5.1:0.51:0.066:0.153:88.9:0.71 (Preparation Example 1: Preparation Example 2: F-2010: DBTDL: thiol: filler: plasticizer). The curing agent part, resin composition, and cured body were prepared in the same manner as in Example 1.

**Comparative Example 5.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the filler component, and the plasticizer (diisononyl adipate) was changed to 4.59:5.1:0.51:0.066:0.2:88.8:0.71 (Preparation Example 1: Preparation Example 2: F-2010: DBTDL: thiol: filler: plasticizer). The curing agent part, resin composition, and cured body were prepared in the same manner as in Example 1.

**Comparative Example 6.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, Dibutyltin dilaurate), the filler component, and the plasticizer (diisononyl adipate) was changed to 4.6:5.11:0.51:0.048:89:0.71 (Preparation Example 1: Preparation Example 2: F-2010:DBTDL: filler: plasticizer). The curing agent part, resin composition, and cured body were prepared in the same manner as in Example 1.

**Comparative Example 7.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the filler component, and the plasticizer (diisononyl adipate) was changed to 4.59:5.1:0.51:0.048:0.096:89:0.71 (Preparation Example 1: Preparation Example 2: F-2010: DBTDL: thiol: filler: plasticizer). The curing agent part, resin composition, and cured body were prepared in the same manner as in Example 1.

**Comparative Example 8.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the carboxylic acid compound (2-EHA, 2-ethylhexanoic acid), the filler component, and the plasticizer (diisononyl adipate) was changed to 4.59:5.1:0.51:0.048:0.096:89:0.71 (Preparation Example 1: Preparation Example 2: F-2010: DBTDL: 2-EHA: filler: plasticizer). The curing agent part, resin composition, and cured body were prepared in the same manner as in Example 1.

**Comparative Example 9.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the thiol compound (1-dodecanethiol), the filler component, and the plasticizer (diisononyl adipate) was changed to 4.59:5.1:0.51:0.06:0.11:88.9:0.71 (Preparation Example 1: Preparation Example 2: F-2010: DBTDL: thiol: filler: plasticizer). The curing agent part, resin composition, and cured body were prepared in the same manner as in Example 1.

**Comparative Example 10.**

A main part was prepared in the same manner as in Example 1, except that the formulation weight ratio of the oil-modified compounds of Preparation Examples 1 and 2, the non-oil-modified compound (Kuraray, F-2010), the urethane reaction catalyst (DBTDL, dibutyltin dilaurate), the carboxylic acid compound (2-EHA, 2-ethylhexanoic acid), the filler component, and the plasticizer (diisononyl adipate) was changed to 4.59:5.10:0.51:0.060:0.11:88.9:0.71 (Preparation Example 1: Preparation Example 2: F-2010: DBTDL: 2-EHA: filler: plasticizer). The curing agent part, resin composition, and cured body were prepared in the same manner as in Example 1.

The physical property evaluation results summarized for each of Examples and Comparative Examples above are as shown in Tables 1 to 4 below. In Tables 1 and 2 below, the hardness (Shore OO and Shore A hardness) is the

hardness measured after maintaining a mixture of the main part and the curing agent part in a volume ratio of 1:1 at room temperature (about 25°C) for 24 hours.

In Tables 1 to 4 below, the curing rate (hardness) is the time (unit: hour) that the Shore OO hardness is first confirmed when the hardness has been confirmed every 30 minutes while mixing the main part and the curing agent part in each of Examples or Comparative Examples in a volume ratio of 1:1 and maintaining the mixture at room temperature (about 25°C) (related to the measurement 6. Measurement of curing rate (hardness confirmation time)).

In Tables 1 to 4 below, the curing rate (viscosity) is t (unit: minutes) of Equation 1 in the method of measuring the curing rate (viscosity increase time), and $V_{initial}$ and $V_1$ are $V_{initial}$ and $V_1$ of Equation 1 above, respectively.

[Table 1]

| | Example | | |
|---|---|---|---|
| | 1 | 2 | 3 |
| Thermal conductivity (W/mK) | 2.342 | 2.60 | 2.41 |
| Al adhesion force ($N/mm^2$) | 0.09~0.15 | 0.049~0.089 | 0.032~0.13 |
| Adhesion force to polyester (gf/cm) | 57 | 20 | 113 |
| Shore 00 hardness | 90 | 88 | 77 |
| Shore A hardness | 78 | 76 | 65 |
| Curvature radius (mm) | 10 | 10 | 8 |
| Module workability | ○ | ○ | ○ |
| Purging wating time (min) | 30 | 40 | 30 |
| Curing rate (hardness) | 3.5 | 4.5 | 6.0 |
| Curing rate (viscosity) | 35.25 | 41.6 | 33.9 |
| $V_{initial}$ (cps) of Equation 1 | 227500 | 116200 | 125400 |
| $V_1$ of Equation 1 | 6454 | 2793 | 3699 |

[Table 2]

| | Example | | | |
|---|---|---|---|---|
| | 4 | 5 | 6 | 7 |
| Thermal conductivity (W/mK) | 2.49 | 2.54 | 2.43 | 2.46 |
| Al adhesion force ($N/mm^2$) | 0.082~0.063 | 0.058~0.090 | 0.033~0.070 | 0.026~0.050 |
| Adhesion force to polyester (gf/cm) | 39 | 44 | 47 | 52 |
| Shore 00 hardness | 95 | 92 | 90 | 93 |
| Shore A hardness | 76 | 78 | 75 | 76 |
| Curvature radius (mm) | 10 | 11 | 10 | 10 |
| Module workability | ○ | ○ | ○ | ○ |
| Purging wating time (min) | 30 | 35 | 45 | 60 |
| Curing rate (hardness) | 5.5 | 6 | 7 | 13 |
| Curing rate (viscosity) | 30.3 | 37.1 | 46.5 | 63.1 |
| $V_{initial}$ (cps) of Equation 1 | 113100 | 110400 | 105200 | 176500 |
| $V_1$ of Equation 1 | 3732 | 2975 | 2262 | 2797 |

[Table 3]

| | Comparative Example | | | | |
|---|---|---|---|---|---|
| | 1 | 2 | 3 | 4 | 5 |
| Thermal conductivity (W/mK) | 2.321 | 2.382 | 2.339 | 2.329 | 2.471 |
| Al adhesion force (N/mm$^2$) | 0.088~0.13 | 0.075~0.13 | 0.1~0.39 | 0.094~0.14 | 0.082~0.18 |
| Adhesion force to polyester (gf/cm) | 37 | 38 | 45 | 44 | 52 |
| Shore 00 hardness | 94 | 94 | 89 | 90 | 97 |
| Shore A hardness | 82 | 75 | 77 | 82 | 78 |
| Curvature radius (mm) | 10 | 10 | 10 | 10 | 10 |
| Module workability | ○ | ○ | ○ | ○ | ○ |
| Purging wating time (min) | 5 | 10 | 25 | 30 | 30 |
| Curing rate (hardness) | 1 | 4 | 2 | 2 | 2 |
| Curing rate (viscosity) | 11.41 | 20.5 | 26.25 | 27.41 | 29.75 |
| $V_{initial}$ (cps) of Equation 1 | 272500 | 178600 | 221000 | 225900 | 215000 |
| $V_1$ of Equation 1 | 23883 | 8712 | 8419 | 8242 | 7227 |

[Table 4]

| | Comparative Example | | | | |
|---|---|---|---|---|---|
| | 6 | 7 | 8 | 9 | 10 |
| Thermal conductivity (W/mK) | 2.72 | 2.62 | 2.60 | 2.48 | 2.41 |
| Al adhesion force (N/mm$^2$) | 0.0095~0.026 | 0.056~0.13 | 0.039~0.17 | 0.12~0.16 | 0.022~0.027 |
| Adhesion force to polyester (gf/cm) | 18 | 30 | 20 | 87 | 97 |
| Shore 00 hardness | 77 | 88 | 82 | 76 | 80 |
| Shore A hardness | 65 | 72 | 70 | 63 | 70 |
| Curvature radius (mm) | 8 | 10 | 10 | 9 | 10 |
| Module workability | ○ | ○ | ○ | ○ | ○ |
| Purging wating time (min) | 5 | 55 | 20 | 40 | 10 |
| Curing rate (hardness) | 2 | 2 | 4.5 | 2 | 3 |
| Curing rate (viscosity) | 16.4 | 58.2 | 20.3 | 45.0 | 12.3 |
| $V_{initial}$ (cps) of Equation 1 | 144200 | 115100 | 140900 | 70450 | 142900 |
| $V_1$ of Equation 1 | 8793 | 1978 | 6941 | 1566 | 11618 |

**Test Example 1.**

To confirm the curing delay effect by the action of the thiol compound and carboxylic acid compound, the resin compositions of Example 1, and Comparative Examples 1, 2, and 5 were evaluated. The main part and the curing agent part in each resin composition of Example or Comparative Examples above were mixed in a volume ratio of 1:1, and changes in viscosity and hardness over time were evaluated, and the results were shown in Figures 4 and 5.

Looking at the figures, in the case of Example 1 comprising the thiol compound and the carboxylic acid compound simultaneously, the viscosity maintenance section in which the viscosity was maintained after mixing was confirmed, and the viscosity quickly increased after the viscosity maintenance section, whereby it can be confirmed that the curability is secured stably after curing delay. Also, in terms of hardness, it can be confirmed that there is a section in which the hardness is not measured for an appropriate amount of time.

It can be known that the viscosity quickly has increased immediately after mixing the main and curing agent parts of Comparative Example 1, which does not comprise a thiol compound and a carboxylic acid compound, and the hardness

also begins to be confirmed and increases at a fast point immediately after mixing.

In the case of Comparative Example 2 comprising only the carboxylic acid compound, the increase tendency of the viscosity was confirmed slowly compared to Comparative Example 1, but there was no viscosity maintenance section where the viscosity was kept constant at the beginning of mixing, the hardness is confirmed too late, and the viscosity does not increase well over time, whereby it can be known that the curability is also insufficient.

In the case of Comparative Example 5 comprising only the thiol compound, the viscosity maintenance section was observed, but it can be known that the viscosity maintenance section is relatively short and the viscosity increase rate after the viscosity maintenance section is too fast. Also, in the case of Comparative Example 5, the hardness also increased too quickly, whereby it could be expected that it would not be easy to secure working hours in a large-area application process, and the like.

**Test Example 2.**

In Table 5 below, the contents of thiol compounds and carboxylic acid compounds in the main parts and cured products of Examples 2 to 7 are summarized.

In Table 5 below, the formulation amount is the amount (unit: weight%) of the thiol compound and carboxylic acid compound added upon production, and the detection amount is the amount (unit: weight%) detected by the GC-MS (Gas Chromatography-Mass Spectrometry) analysis.

From the results in Table 5, it can be known that the thiol compound and carboxylic acid compound added to the main part remain in the cured body after the curing reaction. In Examples 5 to 8, there were cases where the thiol compound and/or carboxylic acid compound was not detected, but this result is caused by the small addition amount, and considering the results of Examples 2 to 4, it can be inferred that the carboxylic acid compound and thiol compound exist in the cured bodies of Examples 5 to 8.

[Table 5]

| | Main part | | | | Cured body | | | |
|---|---|---|---|---|---|---|---|---|
| | Thiol compound | | Carboxylic acid compound | | Thiol compound | | Carboxylic acid compound | |
| | Formulation amount | Detection amount | Formulation amount | Detection amount | Formulation amount | Detection amount | Formulation amount | Detection amount |
| Example 2 | 0.096 | 0.0885 | 0.096 | 0.1403 | 0.048 | 0.0487 | 0.048 | 0.0567 |
| Example 3 | 0.11 | 0.1058 | 0.11 | 0.1662 | 0.055 | 0.0616 | 0.055 | 0.0669 |
| Example 4 | 0.055 | 0.0405 | 0.055 | - | 0.0275 | 0.0154 | 0.0275 | - |
| Example 5 | 0.033 | 0.0258 | 0.033 | - | 0.0165 | 0.06 | 0.0165 | - |
| Example 6 | 0.022 | 0.0139 | 0.022 | - | 0.011 | 0.021 | 0.011 | - |
| Example 7 | 0.011 | 0.046 | 0.011 | - | 0.0055 | - | 0.0055 | - |

## Claims

**1.** A thermal interface material, comprising:

a polyurethane;
one or more compounds selected from the group consisting of a thiol compound and a carboxylic acid compound; and
a filler component.

**2.** The thermal interface material according to claim 1, of which a thermal conductivity is 2.0 W/mK or more.

3. The thermal interface material according to claim 1, of which an adhesion force to aluminum is 0.15 $N/mm^2$ or less.

4. The thermal interface material according to claim 1, of which an adhesion force to polyester is 100 gf/cm or less.

5. The thermal interface material according to claim 1, of which a Shore OO hardness is 95 or less.

6. The thermal interface material according to claim 1, of which a curvature radius is 20 or less.

7. The thermal interface material according to claim 1, wherein the polyurethane comprises a hydroxy group in an amount of 0.1 mol/g or more.

8. The curable composition according to claim 1, wherein the polyurethane comprises a polycaprolactone polyol unit.

9. The thermal interface material according to claim 1, wherein the polyurethane comprises a branched hydrocarbon chain and wherein the branched hydrocarbon chain has 5 or more carbon atoms.

10. The thermal interface material according to claim 1, wherein the polyurethane comprises a unit of a first reactive compound having one hydroxy group and a unit of a second reactive compound having two or more hydroxy groups.

11. The thermal interface material according to claim 10, wherein the unit of the second reactive compound comprises a unit of a third reactive compound having two hydroxy groups and a unit of a fourth reactive compound having three or more hydroxy groups.

12. The thermal interface material according to claim 1, wherein the polyurethane comprises a polyisocyanate unit with trifunctionality or more and a polyisocyanate unit with bifunctionality.

13. The thermal interface material according to claim 1, wherein the thiol compound is a monofunctional compound having a hydrocarbon group.

14. The thermal interface material according to claim 13, wherein the monofunctional compound has a molecular weight in a range of 50 to 400 g/mol.

15. The thermal interface material according to claim 1, wherein the carboxylic acid compound is a monofunctional compound having a hydrocarbon group.

16. The thermal interface material according to claim 15, wherein the monofunctional compound has a molecular weight in the range of 50 to 400 g/mol.

17. The thermal interface material according to claim 1, wherein the carboxylic acid compound has a pKa in a range of 2 to 9.

18. The thermal interface material according to claim 1, comprising both of the carboxylic acid compound and the thiol compound.

19. The thermal interface material according to claim 1, wherein an amount of the filler component is 500 parts by weight or more relative to 100 parts by weight of the polyurethane.

20. The thermal interface material according to claim 1, further comprising a plasticizer.

21. A product, comprising:

a heating element and
the thermal interface material of any one of claims 1 to 20,
wherein the thermal interface material is adjacent to the heating element.

Fig. 1

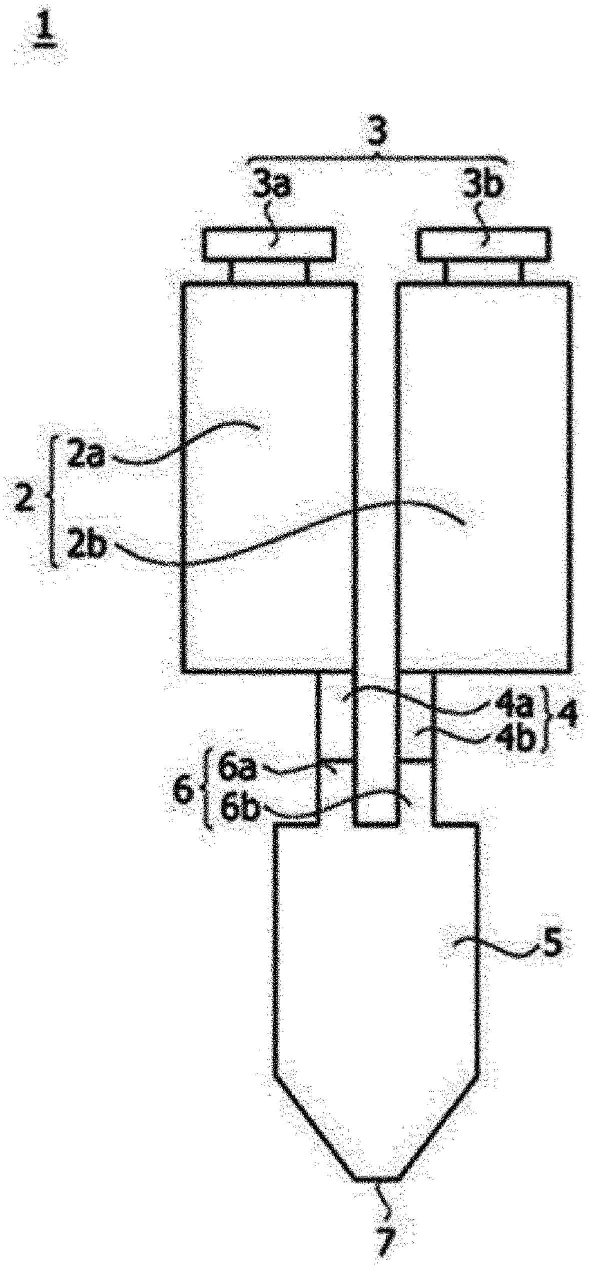

Fig. 2

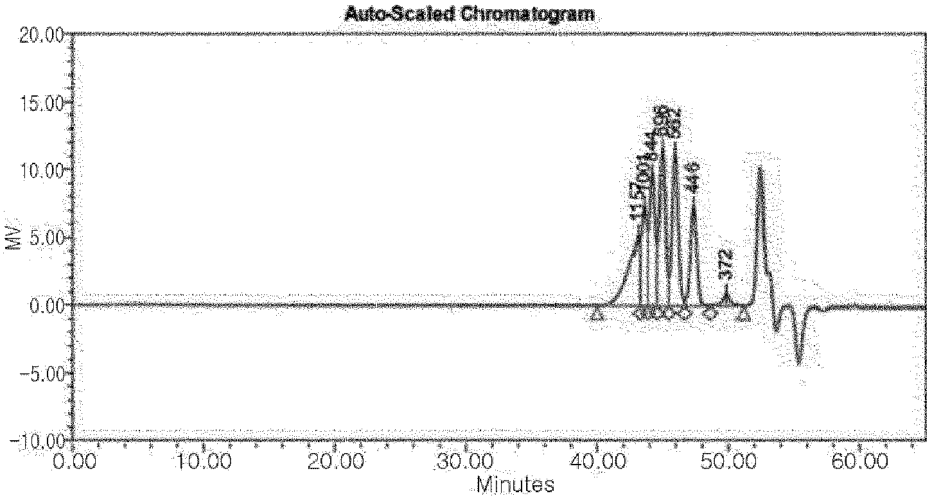


**GPC Results**

| | Retention Time (min) | Mn | Mw | MP | Mz | Mz+1 | Polydispersity | % Area |
|---|---|---|---|---|---|---|---|---|
| 1 | 43.108 | 1367 | 1416 | 1157 | 1480 | 1562 | 1.036374 | 16.66 |
| 2 | 43.588 | 1009 | 1012 | 1001 | 1014 | 1017 | 1.002484 | 11.85 |
| 3 | 44.194 | 843 | 845 | 844 | 847 | 850 | 1.002621 | 16.44 |
| 4 | 44.949 | 695 | 697 | 696 | 698 | 700 | 1.002364 | 19.40 |
| 5 | 45.932 | 560 | 561 | 562 | 563 | 564 | 1.002103 | 20.00 |
| 6 | 47.306 | 446 | 447 | 446 | 447 | 448 | 1.001161 | 13.58 |
| 7 | 49.844 | 373 | 373 | 372 | 373 | 373 | 1.000860 | 2.07 |

Fig. 3

**GPC Results**

| | Retention Time (min) | Mn | Mw | MP | Mz | Mz+1 | Polydispersity | % Area |
|---|---|---|---|---|---|---|---|---|
| 1 | 43.669 | 1196 | 1247 | 1012 | 1312 | 1394 | 1.042145 | 29.32 |
| 2 | 44.253 | 841 | 844 | 843 | 848 | 851 | 1.004144 | 20.73 |
| 3 | 44.997 | 664 | 667 | 675 | 670 | 674 | 1.004912 | 22.70 |
| 4 | 45.965 | 500 | 504 | 515 | 507 | 510 | 1.006928 | 18.39 |
| 5 | 47.380 | 345 | 349 | 360 | 352 | 355 | 1.010339 | 7.70 |
| 6 | 50.200 | 206 | 207 | 201 | 209 | 210 | 1.006839 | 1.17 |

Fig. 4

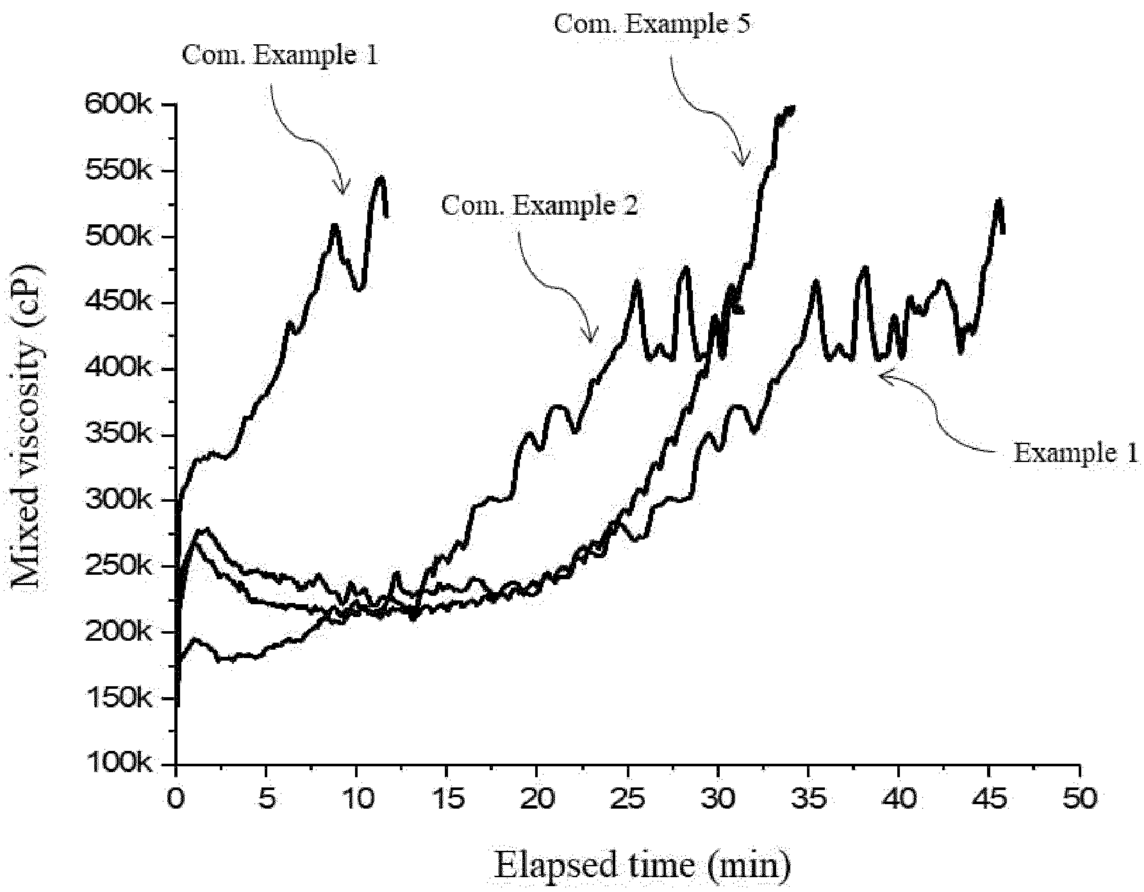
Com. Example 1
Com. Example 5
Com. Example 2
Example 1
600k
550k
500k
450k
400k
350k
300k
250k
200k
150k
100k
Mixed viscosity (cP)
0
5
10
15
20
25
30
35
40
45
50
Elapsed time (min)

Fig. 5

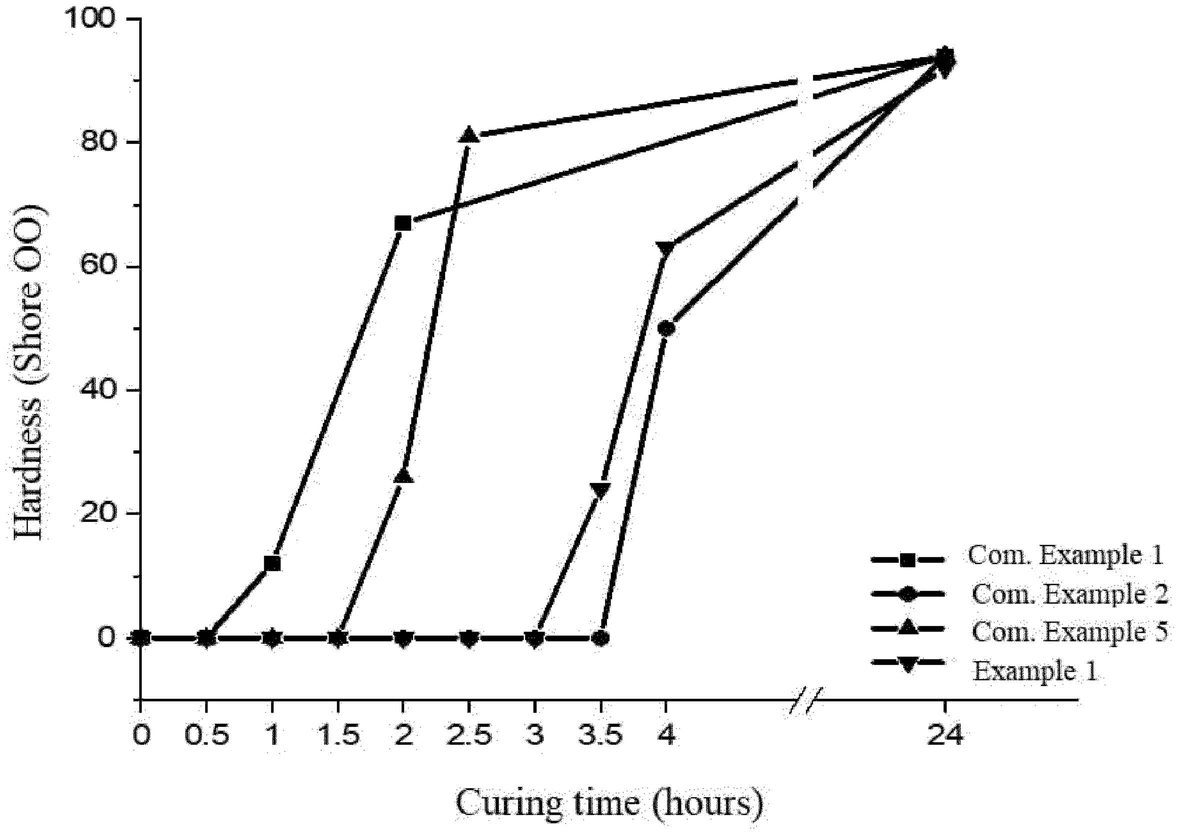
Hardness (Shore OO)
100
80
60
40
20
0
0
0.5
1
1.5
2
2.5
3
3.5
4
24
Curing time (hours)
Com. Example 1
Com. Example 2
Com. Example 5
Example 1

**INTERNATIONAL SEARCH REPORT**

International application No.
**PCT/KR2023/013858**

**A. CLASSIFICATION OF SUBJECT MATTER**

**C08K 5/37**(2006.01)i; **C08K 5/09**(2006.01)i; **C08G 18/42**(2006.01)i; **C08G 18/72**(2006.01)i

According to International Patent Classification (IPC) or to both national classification and IPC

**B. FIELDS SEARCHED**

Minimum documentation searched (classification system followed by classification symbols)

C08K 5/37(2006.01); B60L 50/50(2019.01); C08G 18/38(2006.01); C08G 18/40(2006.01); C08G 18/61(2006.01); C08G 18/65(2006.01); C08K 3/013(2018.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경화성 조성물(curable composition), 히드록시기(hydroxyl group), 티올(thiol), 카복실산 화합물(carboxylic acid compound), 우레탄 반응 촉매(urethane reaction catalyst), 필러(filler), 2액형(two-component type)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2022-0043762 A (LG ENERGY SOLUTION, LTD.) 05 April 2022 (2022-04-05)<br>See claims 1-24; and paragraphs [0009]-[0200]. | 1-7,9-14,19-21<br>8,15-18 |
| Y | KR 10-2021-0030235 A (LG CHEM, LTD.) 17 March 2021 (2021-03-17)<br>See claim 1; and paragraphs [0072]-[0075]. | 8 |
| Y | JP 2011-178899 A (HITACHI CHEM. CO., LTD.) 15 September 2011 (2011-09-15)<br>See claims 1-4; and paragraphs [0023]-[0025]. | 15-18 |
| A | KR 10-2021-0121150 A (HENKEL IP & HOLDING GMBH et al.) 07 October 2021 (2021-10-07)<br>See entire document. | 1-21 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 December 2023** | **29 December 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/013858**

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0122451 A (LG CHEM, LTD.) 30 October 2019 (2019-10-30)<br>See entire document. | 1-21 |

Form PCT/ISA/210 (second sheet) (July 2022)

**INTERNATIONAL SEARCH REPORT**
**Information on patent family members**

International application No.
**PCT/KR2023/013858**

| Patent document cited in search report | Publication date (day/month/year) | Patent family member(s) | Publication date (day/month/year) |
|---|---|---|---|
| KR 10-2022-0043762 A | 05 April 2022 | None | |
| KR 10-2021-0030235 A | 17 March 2021 | CN 113840855 A | 24 December 2021 |
| | | EP 3967726 A1 | 16 March 2022 |
| | | EP 3967726 A4 | 20 July 2022 |
| | | JP 2022-532684 A | 15 July 2022 |
| | | JP 7286199 B2 | 05 June 2023 |
| | | KR 10-2519128 B1 | 07 April 2023 |
| | | US 2022-0227914 A1 | 21 July 2022 |
| | | WO 2021-049863 A1 | 18 March 2021 |
| JP 2011-178899 A | 15 September 2011 | CN 102549038 A | 04 July 2012 |
| | | CN 102549038 B | 06 August 2014 |
| | | JP 2011-079893 A | 21 April 2011 |
| | | JP 2011-079894 A | 21 April 2011 |
| | | JP 2011-178898 A | 15 September 2011 |
| | | JP 5581643 B2 | 03 September 2014 |
| | | JP 5621236 B2 | 12 November 2014 |
| | | JP 5671812 B2 | 18 February 2015 |
| | | KR 10-1413052 B1 | 30 June 2014 |
| | | KR 10-2012-0059634 A | 08 June 2012 |
| | | KR 10-2013-0133101 A | 05 December 2013 |
| | | TW 201114835 A | 01 May 2011 |
| | | US 2012-0196977 A1 | 02 August 2012 |
| | | WO 2011-043090 A1 | 14 April 2011 |
| KR 10-2021-0121150 A | 07 October 2021 | CN 113646351 A | 12 November 2021 |
| | | CN 113646351 B | 21 November 2023 |
| | | EP 3931232 A1 | 05 January 2022 |
| | | EP 3931232 A4 | 02 November 2022 |
| | | JP 2022-521949 A | 13 April 2022 |
| | | US 2021-0371620 A1 | 02 December 2021 |
| | | WO 2020-176437 A1 | 03 September 2020 |
| KR 10-2019-0122451 A | 30 October 2019 | KR 10-2113234 B1 | 20 May 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220116478
- KR 20160105354